(19) Europäisches Patentamt
European Patent Office
Office européen des brevets

(11) **EP 4 319 447 A1**

(12) **EUROPEAN PATENT APPLICATION**
published in accordance with Art. 153(4) EPC

(43) Date of publication:
**07.02.2024 Bulletin 2024/06**

(21) Application number: **22833440.5**

(22) Date of filing: **10.06.2022**

(51) International Patent Classification (IPC):
*H04W 74/08* (2024.01)    *H04W 74/00* (2009.01)
*H04W 56/00* (2009.01)    *H04L 27/26* (2006.01)

(52) Cooperative Patent Classification (CPC):
**H04L 27/26; H04W 56/00; H04W 74/00;**
**H04W 74/08**

(86) International application number:
**PCT/KR2022/008207**

(87) International publication number:
**WO 2023/277384 (05.01.2023 Gazette 2023/01)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **28.06.2021   KR 20210084182**
**22.07.2021   KR 20210096636**

(71) Applicant: **Samsung Electronics Co., Ltd.**
**Suwon-si, Gyeonggi-do 16677 (KR)**

(72) Inventors:
• **LEE, Seunghyun**
**Suwon-si, Gyeonggi-do 16677 (KR)**
• **LEE, Juho**
**Suwon-si, Gyeonggi-do 16677 (KR)**
• **JUNG, Jungsoo**
**Suwon-si, Gyeonggi-do 16677 (KR)**
• **CHOI, Sunghyun**
**Suwon-si, Gyeonggi-do 16677 (KR)**

(74) Representative: **HGF**
**HGF Limited**
**1 City Walk**
**Leeds LS11 9DX (GB)**

(54) **METHOD AND DEVICE FOR RANDOM ACCESS IN WIRELESS COMMUNICATION SYSTEM**

(57)     The present disclosure relates to a 5G or 6G communication system for supporting higher data transmission rates than 4G systems such as LTE. More specifically, disclosed are a method and device pertaining to generating and detecting a random access preamble signal for random access in ultra-high frequency band wireless communication. A terminal according to an embodiment disclosed herein comprises a transmission and reception unit and a control unit, wherein the control unit is configured to: generate a preamble signal; transmit the preamble signal to a base station; and receive a random access response including timing advance (TA) information from the base station in response to the transmission of the preamble signal, wherein the preamble signal may include a first signal portion related to a first sequence, and a second signal portion related to a guard time and a second sequence.

FIG. 1

**Description**

**[Technical Field]**

The disclosure relates to a PRACH preamble structure for a symbol having a relatively short length in comparison with a maximum round-trip time in a cell in ultra-high frequency band wireless communication, and a method and a device for random access.

**[Background Art]**

A review of the development of mobile communication from generation to generation shows that the development has mostly been directed to technologies for services targeting humans, such as voice-based services, multimedia services, and data services. It is expected that connected devices which are exponentially increasing after commercialization of 5G communication systems will be connected to communication networks. Examples of things connected to networks may include vehicles, robots, drones, home appliances, displays, smart sensors connected to various infrastructures, construction machines, and factory equipment. Mobile devices are expected to evolve in various formfactors, such as augmented reality glasses, virtual reality headsets, and hologram devices. In order to provide various services by connecting hundreds of billions of devices and things in the 6G era, there have been ongoing efforts to develop improved 6G communication systems. For these reasons, 6G communication systems are referred to as Beyond-5G systems.

6G communication systems, which are expected to be implemented approximately by 2030, will have a maximum transmission rate of tera (1,000 giga)-level bps and a radio latency of 100$\mu$sec, and thus will be 50 times as fast as 5G communication systems and have the 1/10 radio latency thereof.

In order to accomplish such a high data transmission rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, a technology capable of securing the signal transmission distance (that is, coverage) will become more crucial. It is necessary to develop, as major technologies for securing the coverage, multiantenna transmission technologies including radio frequency (RF) elements, antennas, novel waveforms having a better coverage than OFDM, beamforming and massive MIMO, full dimensional MIMO (FD-MIMO), array antennas, and large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the frequency efficiencies and system networks, the following technologies have been developed for 6G communication systems: a full-duplex technology for enabling an uplink (LTE transmission) and a downlink (node B transmission) to simultaneously use the same frequency resource at the same time; a network technology for utilizing satellites, high-altitude platform stations (HAPS), and the like in an integrated manner; a network structure innovation technology for supporting mobile nodes B and the like and enabling network operation optimization and automation and the like; a dynamic spectrum sharing technology though collision avoidance based on spectrum use prediction, an artificial intelligence (AI)-based communication technology for implementing system optimization by using AI from the technology design step and internalizing end-to-end AI support functions; and a next-generation distributed computing technology for implementing a service having a complexity that exceeds the limit of UE computing ability by using super-high-performance communication and computing resources (mobile edge computing (MEC), clouds, and the like). In addition, attempts have been continuously made to further enhance connectivity between devices, further optimize networks, promote software implementation of network entities, and increase the openness of wireless communication through design of new protocols to be used in 6G communication systems, development of mechanisms for implementation of hardware-based security environments and secure use of data, and development of technologies for privacy maintenance methods.

It is expected that such research and development of 6G communication systems will enable the next hyper-connected experience in new dimensions through the hyper-connectivity of 6G communication systems that covers both connections between things and connections between humans and things. Particularly, it is expected that services such as truly immersive XR, high-fidelity mobile holograms, and digital replicas could be provided through 6G communication systems. In addition, with enhanced security and reliability, services such as remote surgery, industrial automation, and emergency response will be provided through 6G communication systems, and thus these services will be applied to various fields including industrial, medical, automobile, and home appliance fields.

Meanwhile, a terminal may perform a random access procedure with a base station to match uplink synchronization to perform communication with the base station. For example, a terminal may transmit a random access preamble generated in a predetermined sequence to a base station, and the base station may measure a round trip delay (RTD) with the terminal through the random access preamble and then determine a timing advance (TA) value for adjusting the transmission time of the uplink signal of the terminal based on the measured RTD, and may transmit the determined TA value to the terminal through a random access response.

At this time, a physical random access channel (PRACH) in existing LTE or NR is designed to be suitable for an environment in which the symbol length of a signal is much larger than the maximum RTD of a cell. However, wireless communication systems in ultra-high frequency bands such as tera-hertz (THz) and sub-THz bands may use waveforms with very short symbol lengths as they use large subcarrier spacing due to effects such as extreme phase noise. In this case, there are limitation in applying the PRACH preamble sequence design according to the existing LTE or NR method.

**[Disclosure of Invention]**

**[Technical Problem]**

Therefore, an aspect of the disclosure is to provide a method for generating and detecting a preamble sequence that may be applied to a communication system of a ultra-high frequency band having a symbol with a relatively short length in comparison with the maximum RTD of a cell.

**[Solution to Problem]**

In order to solve the above problem, a terminal of a communication system according to an embodiment of the disclosure may include a transceiver, and a controller, wherein the controller is configured to generate a preamble signal, transmit the preamble signal to a base station, and receive a random access response including timing advance (TA) information from the base station in response to the transmission of the preamble signal, and wherein the preamble signal includes a first signal part related to a first sequence, a guard time, and a second signal part related to a second sequence.

According to an embodiment, the timing advance may be determined based on a round trip delay (RTD) measured based on the preamble signal, and the RTD may be determined based on a first delay time determined based on the first signal part and a second delay time determined based on the second signal part.

According to an embodiment, the first delay time is determined based on a cyclic correlation between a first correlation signal and a signal received in a first window based on the length of the first signal part, and the second delay time is determined based on a cyclic correlation between a second correlation signal and a signal received in one or more second windows based on the first delay time.

According to an embodiment, the controller may be further configured to obtain a set of root indices related to the first sequence and a set of root indices related to the second sequence, the first sequence is generated based on a root index randomly selected from the set of root indices related to the first sequence, and the second sequence is generated based on a root index randomly selected from the set of root indices related to the second sequence.

According to an embodiment, the first signal part may include a first cyclic prefix (CP) and one or more symbols including the first sequence, and the second signal part may include a second CP and one symbol including the second sequence.

According to an embodiment, the length of the guard time may be determined according to a length of the first signal part.

According to an embodiment, the length of the guard time may have a preconfigured length.

According to an embodiment, the first sequence and the second sequence may be generated based on the same root index and have different cyclic shifts.

According to an embodiment, the length of the first signal part may be determined based on a maximum round trip delay (RTD) or delay spread of a cell.

A base station of a communication system according to an embodiment of the disclosure may include a transceiver, and a controller, wherein the controller is configured to receive a preamble signal from a terminal, and transmit a random access response including timing advance (TA) information to the terminal in response to the reception of the preamble signal, and wherein the preamble signal includes a first signal part related to a first sequence, a guard time, and a second signal part related to a second sequence.

A method by a terminal of a communication system according to an embodiment of the disclosure may include generating a preamble signal, transmitting the preamble signal to a base station, and receiving a random access response including timing advance (TA) information from the base station in response to the transmission of the preamble signal, wherein the preamble signal includes a first signal part related to a first sequence, a guard time, and a second signal part related to a second sequence.

A method by a base station of a communication system according to an embodiment of the disclosure may include receiving a preamble signal from a terminal, and

transmitting a random access response including timing advance (TA) information to the terminal in response to the reception of the preamble signal, wherein the preamble signal includes a first signal part related to a first sequence, a guard time, and a second signal part related to a second sequence.

**[Advantageous Effects of Invention]**

According to an embodiment of the disclosure, a terminal may generate a preamble signal including a first signal part, a guard time, and a second signal part in a system in which a relatively short symbol length in comparison with the maximum RTD of a cell in the ultra-high frequency band is applied, and a base station may receive the preamble signal and perform a preamble detection operation and an RTD calculation of a signal, even at a symbol length shorter than the maximum RTD of the signal, thereby having the effect of enabling a random access operation to be performed in the system of the ultra-high frequency band.

**[Brief Description of Drawings]**

FIG. 1 illustrates a basic structure of a time-frequency domain in LTE;
FIG. 2 illustrates a downlink control channel of LTE;
FIG. 3 illustrates transmission resources of a downlink control channel in 5G;
FIG. 4 illustrates an example of configuration for a control region in 5G;
FIG. 5 illustrates an example of configuration for a downlink RB structure in 5G;
FIG. 6A is a flowchart illustrating an operation of a base station for transmitting and receiving a PRACH preamble signal;
FIG. 6B is a flowchart illustrating an operation of a UE for transmitting and receiving a PRACH preamble signal;
FIG. 7A illustrates the basic structure of a PRACH preamble signal according to an embodiment of the disclosure;
FIG. 7B is a flowchart illustrating an operation of a terminal for generating a PRACH preamble signal according to an embodiment of the disclosure;
FIG. 8 illustrates a method of transmitting root index values of SEQ1 and SEQ2 and resource information through a physical broadcast channel (PBCH) according to an embodiment of the disclosure;
FIG. 9 illustrates a method of transmitting root index values of SEQ1 and SEQ2 and resource information through a master information block (MIB) according to an embodiment of the disclosure;
FIG. 10 illustrates a method of transmitting root index values of SEQ1 and SEQ2 and resource information through a system information block (SIB) according to an embodiment of the disclosure;
FIGS. 11A and 11B illustrate a basic principle in which a base station receives a preamble transmitted by a terminal so as to estimate an RTD value of a signal according to an embodiment of the disclosure;
FIG. 12 illustrates the structure of a preamble generated by a terminal according to the first embodiment of the disclosure;
FIG. 13 illustrates a detection window for detecting a preamble signal by a base station according to the first embodiment of the disclosure;
FIG. 14 illustrates an example of a preamble reception operation of a base station according to the first embodiment of the disclosure;
FIG. 15 illustrates the structure of a preamble generated by a terminal according to the second embodiment of the disclosure;
FIG. 16 illustrates a detection window for detecting a preamble signal by a base station according to the second embodiment of the disclosure;
FIG. 17 illustrates an example of a preamble reception operation of a base station according to the second embodiment of the disclosure;
FIG. 18 is a block diagram showing the internal structure of a base station according to an embodiment of the disclosure;
FIG. 19 is a block diagram illustrating the internal structure of a terminal according to an embodiment of the disclosure; and
FIG. 20 illustrates simulation results obtained by evaluating reception performance of a preamble signal according to the first embodiment of the disclosure.

**[Mode for the Invention]**

Hereinafter, embodiments of the disclosure will be described in detail with reference to the accompanying drawings. In the following description of the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

A wireless communication system is advancing to a broadband wireless communication system for providing high-speed and high-quality packet data services using communication standards, such as high-speed packet access (HSPA) of 3GPP, LTE {long-term evolution or evolved universal terrestrial radio access (E-UTRA)}, LTE-Advanced (LTE-A), LTE-Pro, high-rate packet data (HRPD) of 3GPP2, ultra-mobile broadband (UNM), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (LTL). The uplink indicates a radio link through which a user equipment (UE) (or a mobile station (MS)) transmits data or control signals to a base station (BS) (eNode B), and the downlink indicates a radio link through which the base station transmits data or control signals to the LTE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the LTE, as well as the maximum data rate. In order to satisfy such requirements, transmission/reception technologies including a further enhanced multi-input multi-output (MIMO) transmission technique are required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of LTEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 LTEs/km2) in a cell. In addition, the UEs supporting mMTC may require wider coverage than those of other services provided by the 5G communication system because the LTEs are likely to be located in a shadow area, such as a basement of a building, which is not covered by the cell due to the nature of the service. The LTE supporting mMTC must be configured to be inexpensive, and requires a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5 ms, and also requires a packet error rate of 10-5 or less. Therefore, for the services supporting URLLC, a 5G system must provide a transmit time interval (TTI) shorter than those of other services, and also may require a design for assigning a large number of resources in a frequency band in order to secure reliability of a communication link.

The three 5G services, that is, eMBB, URLLC, and mMTC, may be multiplexed and transmitted in a single system. In order to satisfy different requirements of the respective services, different transmission/reception techniques and transmission/reception parameters may be used between the services.

Hereinafter, the frame structure of the LTE and LTE-A systems will be described in more detail with reference to the drawings.

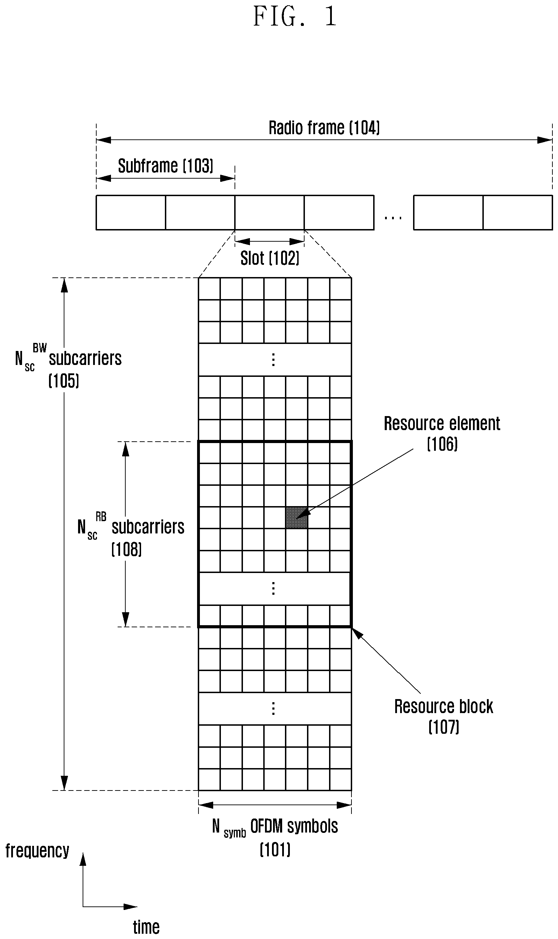

FIG. 1 illustrates the basic structure of a time-frequency domain, which is a radio resource domain in which data or control channel is transmitted in an LTE system.

In FIG. 1, the horizontal axis represents a time domain and the vertical axis represents a frequency domain. The minimum transmission unit in the time domain is an OFDM symbol. $N_{symb}$ 101 OFDM symbols are gathered to constitute one slot 102, and two slots are gathered to constitute one subframe 103. The length of the slot is 0.5 ms, and the length of the subframe is 1.0 ms. In addition, the radio frame 104 is a time domain unit configured by 10 subframes. The minimum transmission unit in the frequency domain is a subcarrier, and the bandwidth of the entire system transmission bandwidth is configured by a total of $N_{BW}$ 105 subcarriers. A basic unit of resources in the time-frequency domain is a resource element (RE) 106 and may be represented by an OFDM symbol index and a subcarrier index. A resource block (RB or physical resource block (PRB)) 107 is defined as $N_{symb}$ consecutive OFDM symbols 101 in the time domain and $N_{RB}$ consecutive subcarriers 108 in the frequency domain. Accordingly, one RB 108 is configured by $N_{symb} \times N_{RB}$ REs 106. In general, the minimum transmission unit of data is an RB unit. In the LTE system, $N_{symb} = 7$ and $N_{RB} = 12$, and $N_{BW}$ and $N_{RB}$ are proportional to the bandwidth of the system transmission band.

Next, downlink control information (DCI) in LTE and LTE-A systems will be described in detail.

In the LTE system, scheduling information for downlink data or uplink data is transmitted from a base station to a terminal through DCI.

DCI defines several formats, and applies a DCI format determined according to

whether it is scheduling information for uplink data or scheduling information for downlink data,
whether it is a compact DCI having a small size of control information,
whether to apply spatial multiplexing using multiple antennas, and
whether DCI is for power control or not.

For example, DCI format 1, which is scheduling control information for downlink data, is configured to include at least the following pieces of control information.

- Resource allocation type 0/1 flag: Notify of whether the resource allocation method is type 0 or type 1.

Type 0 allocates resources in units of resource block groups (RBGs) by applying a bitmap method. In the LTE system, a basic unit of scheduling is a resource block (RB) represented by time and frequency domain resources, and an RBG is configured by a plurality of RBs to be a basic unit of scheduling in the type 0 method.

Type 1 allows a specific RB to be allocated within an RBG.

- Resource block assignment: RBs allocated for data transmission are notified of. The resource to be expressed is determined according to the system bandwidth and resource allocation method.
- Modulation and coding scheme (MCS): Notifies of a modulation method used for data transmission and the size of a transport block which is data to be transmitted.
- HARQ process number: Notify of the HARQ process number.
- New data indicator: Notify of whether it is HARQ initial transmission or retransmission.
- Redundancy version: Notify of a redundancy version of HARQ.
- Transmit power control (TPC) command for physical uplink control channel (PUCCH): Notify of a transmit power control command for PUCCH, which is an uplink control channel.

The DCI is transmitted through a physical downlink control channel (PDCCH) that is a downlink physical control channel through a channel coding and modulation process.

A cyclic redundancy check (CRC) is added to a DCI message payload, and the CRC is scrambled by a radio network temporary identifier (RNTI) corresponding to the identity of a terminal.

Different RNTIs are used according to the purpose of the DCI message, e.g., UE-specific data transmission, power control command, or random access response. The RNTI is not transmitted explicitly but is included in the CRC calculation process and transmitted. Upon receiving the DCI message transmitted on the PDCCH, the terminal may identify the CRC by using the allocated RNTI, and when the CRC identification result is correct, it may be identified that the corresponding message has been transmitted to the terminal.

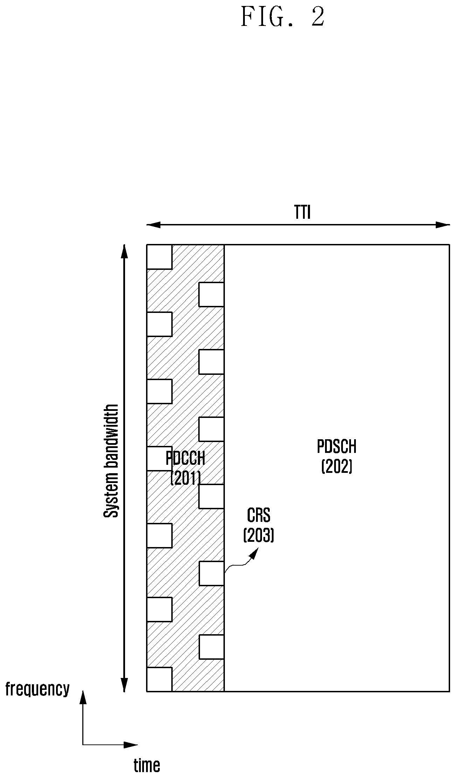

FIG. 2 illustrates a PDCCH 201, which is a physical downlink channel of LTE through which DCI is transmitted.

Referring to FIG. 2, the PDCCH 201 is time-multiplexed with a PDSCH 202, which is a data transmission channel, and is transmitted over the entire system bandwidth. The region of a PDCCH 201 is expressed as the number of OFDM symbols, which is indicated to a LTE using a control format indicator (CFI) transmitted through a physical control format indicator channel (PCFICH).

By allocating the PDCCH 201 to OFDM symbols existing in the front part of a subframe, a UE is capable of decoding downlink scheduling allocation as promptly as possible. Accordingly, a downlink shared channel (DL-SCH) decoding latency, that is, the overall downlink transmission latency, may be reduced. A single PDCCH delivers a single DCI message, and a plurality of LTEs may be scheduled simultaneously in a downlink and an uplink, and thus transmission of a plurality of PDCCHs may be performed simultaneously in each cell.

A cell-specific reference signal (CRS) 203 is used as a reference signal for decoding the PDCCH 201. The CRS 203 is transmitted for each subframe over the entire band, and scrambling and resource mapping may be different for each cell identity (ID).

The CRS 203 is a reference signal used by all UEs in common, and thus UE-specific beamforming may not be used. Therefore, the multi-antenna transmission scheme for a PDCCH of LTE may be limited to an open-loop transmission diversity scheme. The UE is implicitly notified of the number of ports of a CRS by decoding a physical broadcast channel (PBCH).

The resource allocation of the PDCCH 201 is performed in units of control-channel elements (CCE), and a single CCE includes 9 resource element groups (REG), that is, a total of 36 resource elements (REs). The number of CCEs required for the specific PDCCH 201 may be 1, 2, 4, or 8, which is determined based on the channel-coding rate of a DCI message payload.

As described above, a different number of CCEs is used to implement link adaptation of the PDCCH 201. The UE needs to detect a signal without knowing information associated with the PDCCH 201. In LTE, a search space indicating a set of CCEs is defined for blind decoding.

The search space includes a plurality of sets according to each CCE aggregation level (AL), which is not explicitly signaled but is implicitly defined by a subframe number and a function associated with a UE identity.

In each subframe, a UE decodes the PDCCH 201 with respect to all possible resource candidates that may be generated from CCEs in the configured search space, and processes information that is declared to be valid to the corresponding LTE via CRC identification.

The search space may be classified as a UE-specific search space and a common search space. A group of UEs or all UEs may search the common search space of the PDCCH 201 in order to receive cell-common control information such as a paging message or dynamic scheduling relating to system information. For example, scheduling allocation information of a DL-SCH for transmission of system information block (SIB)-1 including cell operator information or the like may be received by searching the common search space of the PDCCH 201.

In LTE, the entire PDCCH region is configured as a set of CCEs in the logical region, and a search space including a set of CCEs exists. A search space may be classified as a common search space and a UE-specific search space, and the search space for an LTE PDCCH may be defined as follows.

---

The set of PDCCH candidates to monitor are defined in terms of search spaces, where a search space $S_k^{(L)}$ at aggregation level $L \in \{1,2,4,8\}$ is defined by a set of PDCCH candidates. For each serving cell on which PDCCH is monitored, the CCEs corresponding to PDCCH candidate $m$ of the search space $S_k^{(L)}$ are given by

$$L \left\{ (Y_k + m') \bmod \lfloor N_{CCE,k} / L \rfloor \right\} + i$$

where $y_t$ is defined below, $i = 0, \cdots, L - 1$. For the common search space $m' = m$. For the PDCCH UE specific search space, for the serving cell on which PDCCH is monitored, if the monitoring UE is configured with carrier indicator field then $m' = m + M^{(L)} \cdot n_{CI}$ where $n_{CI}$ is the carrier indicator field value, else if the monitoring UE is not configured with carrier indicator field then $m' = m$, where $m = 0, \cdots, M^{(L)} - 1$. $M^{(L)}$ is the number of PDCCH candidates to monitor in the given search space.

Note that the carrier indicator field value is the same as *ServCellIndex*

For the common search spaces, $Y_k$ is set to 0 for the two aggregation levels L = 4 and L = 8.

For the UE-specific search space $S_k^{(L)}$ at aggregation level $L$, the variable $Y_k$ is defined by

$$Y_k = (A \cdot Y_{k-1}) \bmod D$$

where $Y_{-1} = n_{RNTI} \neq 0$, $A = 39827$, $D = 65537$ and $k = \lfloor \frac{n_s}{2} \rfloor$, $n_s$ is the slot number within a radio frame.

The RNTI value used for $n_{RNTI}$ is defined in subclause 7.1 in downlink and subclause 8 in uplink.

---

According to the above-mentioned definition of the search space for a PDCCH, the UE-specific search space is not explicitly signaled but is defined implicitly by a subframe number and a function associated with a UE identity.

In other words, the fact that a UE-specific search space is changed depending on a subframe number denotes that the UE-specific search space may be changed over time. Through the above, a problem (a blocking problem) in which a specific LTE is incapable of using a search space due to other UEs among UEs may be overcome.

A UE may not be scheduled in a subframe since all CCEs that the UE searches are currently used by other scheduled UEs within the same subframe. However, since the search space is changed over time, this problem does not occur in a subsequent subframe. For example, although UE-specific search spaces of UE #1 and UE #2 partially overlap in a specific subframe, the overlap may be expected to be different in a subsequent subframe since a UE-specific search space is different for each subframe.

According to the above-described definition of the search space for a PDCCH, a common search space is defined as a set of CCEs agreed upon in advance since a predetermined group of UEs or all UEs need to receive a PDCCH. In other words, the common search space is not changed depending on a UE identity, a subframe number, or the like.

Although the common search space exists for transmission of various system messages, the common search space may be used for transmitting control information of an individual LTE. Through the above, the common search space may be used as a solution for the phenomenon in which a UE is not scheduled due to the lack of available resources in a UE-specific search space.

A search space is a set of candidate control channels including CCEs that a UE is supposed to attempt to decode on a given aggregation level. There are various aggregation levels for binding one, two, four, and eight CCEs into a single bundle, and thus a UE has multiple search spaces.

In an LTE PDCCH, the number of PDCCH candidates that are to be monitored by a UE in a search space and are defined based on an aggregation level is defined in the table below.

[Table 1]

| Search space $S_k^{(L)}$ | | | Number of PDCCH candidates $M^{(L)}$ |
|---|---|---|---|
| Type | Aggregation level $L$ | Size [in CCEs] | |
| UE-specific | 1 | 6 | 6 |
| | 2 | 12 | 6 |
| | 4 | 8 | 2 |
| | 8 | 16 | 2 |
| Common | 4 | 16 | 4 |
| | 8 | 16 | 2 |

According to [Table 1], in the case of a UE-specific search space, aggregation levels {1, 2, 4, 8} are supported, and in this instance, there are {6, 6, 2, 2} PDCCH candidates, respectively. In the case of a common search space 302, aggregation levels {4, 8} are supported, and in this instance, there are {4, 2} PDCCH candidates, respectively.

The common search space supports only aggregation levels {4, 8} in order to improve coverage characteristics, since a system message generally needs to arrive at the edge of a cell.

DCI transmitted in the common search space is defined only for a specific DCI format, such as 0/1A/3/3A/1C, corresponding to the purpose of power control or the like for a LTE group or a system message.

In the common search space, a DCI format involving spatial multiplexing is not supported.

A downlink DCI format which is supposed to be decoded in a UE-specific search space may be changed depending on the transmission mode configured for the corresponding UE. The transmission mode is configured via RRC signaling, and thus a subframe number is not accurately defined in association with whether the corresponding configuration is effective for the corresponding LTE. Therefore, the LTE may always perform decoding with respect to DCI format 1A, irrespective of the transmission mode, so as to operate in a manner in which communication is not lost.

In the above description, a method of transmitting or receiving a downlink control channel and downlink control information and a search space in legacy LTE and LTE-A have been described.

Hereinafter, a downlink control channel in the 5G communication system which is currently under discussion will be described in detail with reference to drawings.

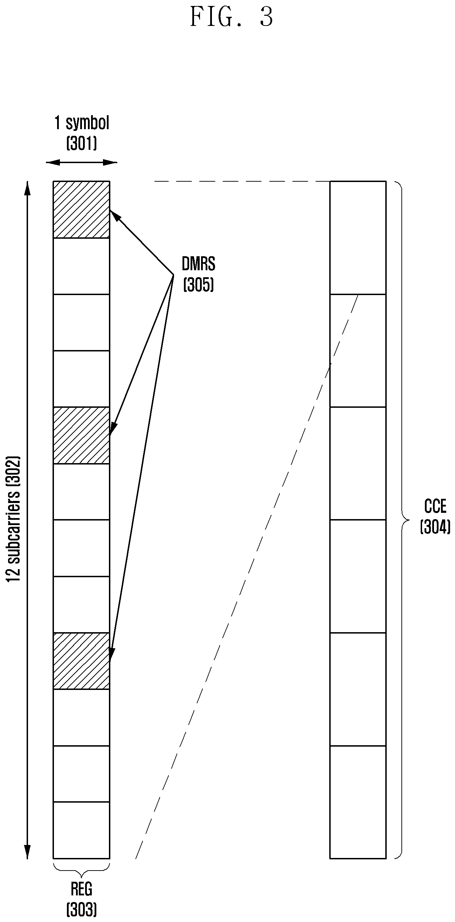

FIG. 3 illustrates an example of the basic unit of time and frequency resources configured for a downlink control channel usable in 5G. According to FIG. 3, the basic unit (REG) of time and frequency resources configured for a control channel includes one OFDM symbol 301 on the time axis, and 12 subcarriers 302, that is, 1 RB, on the frequency axis.

By assuming 1 OFDM symbol 301 as a basic time-axis unit when configuring the basic unit of a control channel, a data channel and a control channel may be time-multiplexed within a single subframe.

By placing a control channel before a data channel, the processing time perceived by a user may be reduced, and thus, a latency requirement may be easily satisfied.

The basic frequency-axis unit of a control channel is configured as 1 RB 302, and thus frequency multiplexing between a control channel and a data channel may be effectively performed.

By concatenating REGs 303 illustrated in FIG. 3, a control channel region may be configured in various sizes. For example, when the CCE 304 is a basic unit for allocation of a downlink control channel in 5G, 1 CCE 304 may include a plurality of REGs 303.

A description will be provided with reference to the REG 303 of FIG. 3.

When the REG 303 includes 12 REs and 1 CCE 304 includes 6 REGs 303, this denotes that 1 CCE 304 includes 72 REs.

If a downlink control region is configured, the corresponding region may include a plurality of CCEs 304, and a specific downlink control channel may be transmitted by being mapped to a single CCE or to multiple CCEs 304 in the control region, depending on the aggregation level (AL).

The CCEs 304 in the control region may be distinguished by numbers, and the numbers may be assigned according to a logical mapping scheme.

The basic unit of the downlink control channel of FIG. 3,
that is, the REG 303 may include REs to which DCI is mapped and a region to which a demodulation reference signal (DMRS) 305, which is a reference signal for decoding the DCI, is mapped.

As illustrated in FIG. 3, the DMRS 305 may be transmitted in 6 REs within 1 REG 303. For reference, the DMRS 303 is transmitted using precoding that is the same as that of a control signal mapped to the REG 303, and thus a LTE is capable of decoding control information without information associated with precoding that a base station has applied.

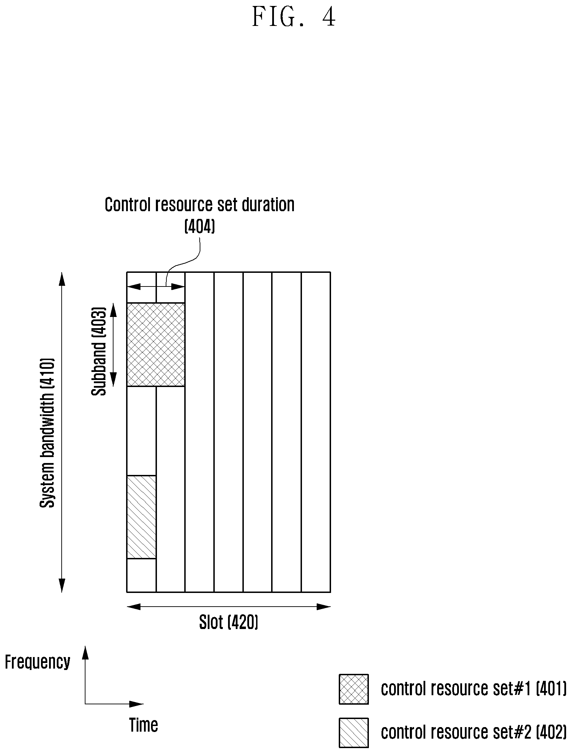

FIG. 4 illustrates an example of a control region (a control resource set (CORESET)) in which a downlink control channel is transmitted in a 5G wireless communication system.

FIG. 4 shows an example in which two control regions (control region #1 401 and control region #2 402) are configured within a system bandwidth 410 on the frequency axis and 1 slot 420 on the time axis (e.g., an example of FIG. 4 assumes that 1 slot includes 7 OFDM symbols). The control region 401 or 402 may be configured based on a specific subband 403 within the entire system bandwidth 410 on the frequency axis. On the time axis, the control region may be configured based on one or multiple OFDM symbols, which may be defined as a control region length (control resource set duration 404). In the example of FIG. 4, control region #1 401 is configured based on a control region length of 2 symbols, and control region #2 is configured based on a control region length of 1 symbol.

The control region in 5G, as described above, may be configured via higher-layer signaling (e.g., system information, master information block (MIB), RRC signaling) to a LTE by a base station.

Configuring a control region for a UE is providing information associated with the location of the control region, a subband, resource allocation of the control region, a control region length, and the like. For example, the following information may be included.

[Table 2]

| - Configuration information 1. | Frequency axis RB allocation information |
|---|---|
| - Configuration information 2. | Control region start symbol |
| - Configuration information 3. | Control region symbol length |
| - Configuration information 4. | REG bundling size (2 or 3 or 6) |
| - Configuration information 5. | Transmission mode (interleaved transmission scheme or non-interleaved transmission scheme) |
| - Configuration information 6. | DMRS configuration information (precoder granularity) |
| - Configuration information 7. | Search space type (common search space, group-common search space, UE-specific search space) |
| - Configuration information 8. | DCI format to be monitored in corresponding control region |
| - Other | |

In addition to the above-described configuration information, various types of information required for transmitting a downlink control channel may be configured for a UE.

Next, downlink control information (DCI) in 5G will be described in detail.

In the 5G system, scheduling information associated with uplink data (physical uplink shared channel (PUSCH)) or downlink data (physical downlink shared channel (PDSCH)) may be transferred from a base station to a LTE via DCI.

The UE may monitor a DCI format for fallback and a DCI format for non-fallback in association with a PUSCH or PDSCH.

The fallback DCI format may be implemented as a fixed field between a base station and a UE, and the non-fallback DCI format may include a configurable field.

The fallback DCI that schedules a PUSCH may include the information shown below.

[Table 3]

| |
|---|
| - Identifier for DCI formats - [1] bit |
| - Frequency domain resource assignment $-\lceil \log_2(N_{RB}^{UL,BWP}(N_{RB}^{UL,BWP} + \rceil 1)/2)\rceil\rceil$ bits |
| - Time domain resource assignment - X bits |
| - Frequency hopping flag - 1 bit. |
| - Modulation and coding scheme - [5] bits |
| - New data indicator -1 bit |
| - Redundancy version - [2] bits |
| - HARQ process number - [4] bits |
| - TPC command for scheduled PUSCH - [2] bits |
| - ULISUL indicator - 0 or 1 bit |

The non-fallback DCI that schedules a PUSCH may include the information shown below.

[Table 4]

| |
|---|
| - Carrier indicator - 0 or 3 bits |
| - Identifier for DCI formats - [1] bits |
| - Bandwidth part indicator - 0, 1 or 2 bits |
| - Frequency domain resource assignment |
| $\lceil N_{RB}^{UL,BWP}/P\rceil$ bits . For resource allocation type 0, |
| $\lceil \log_2(N_{RB}^{UL,BWP}(N_{RB}^{UL,BWP} + 1)/2)\rceil$ . For resource allocation type 1, bits |
| - Time domain resource assignment -1, 2, 3, or 4 bits |
| - VRB-to-PRB mapping - 0 or 1 bit, only for resource allocation type 1. |
|       • 0 bit if only resource allocation type 0 is configured; |
|       • 1 bit otherwise. |
| - Frequency hopping flag - 0 or 1 bit, only for resource allocation type 1. |
|       • 0 bit if only resource allocation type 0 is configured; |
|       • 1 bit otherwise. |
| - Modulation and coding scheme - 5 bits |
| - New data indicator - 1 bit |
| - Redundancy version - 2 bits as defined in section x.x of [6, TS38.214] |
| - HARQ process number - 4 bits |
| - 1st downlink assignment index - 1 or 2 bits |
|       • 1 bit for semi-static HARQ-ACK codebook; |
|       • 2 bits for dynamic HARQ-ACK codebook with single HARQ-ACK codebook. |
| - 2nd downlink assignment index - 0 or 2 bits |
|       • 2 bits for dynamic HARQ-ACK codebook with two HARQ-ACK sub-codebooks; |
|       • 0 bit otherwise. |
| - TPC command for scheduled PUSCH - 2 bits |
| $-\lceil \log_2\left(\sum_{k=1}^{Lmax}\binom{N_{SRS}}{k}\right)\rceil$ - SRS resource indicator - $\lceil \log_2\left(\sum_{k=1}^{Lmax}\binom{N_{SRS}}{k}\right)\rceil$ or $\lceil \log_2(N_{SRS})\rceil$ bits |
| $\lceil \log_2\left(\sum_{k=1}^{Lmax}\binom{N_{SRS}}{k}\right)\rceil$ . $\lceil \log_2\left(\sum_{k=1}^{Lmax}\binom{N_{SRS}}{k}\right)\rceil$ bits for non-codebook based PUSCH |

(continued)

transmission;

$\lceil log_2(N_{SRS})\rceil$ bits for codebook based PUSCH transmission.

- Precoding information and number of layers -up to 6 bits
- Antenna ports - up to 5 bits
- SRS request - 2 bits
- CSI request - 0, 1, 2, 3, 4, 5, or 6 bits
- CBG transmission information - 0, 2, 4, 6, or 8 bits
- PTRS-DMRS association - 2 bits.
- beta_offset indicator - 2 bits
- DMRS sequence initialization - 0 or 1 bit
- UL/SUL indicator - 0 or 1 bit

The fallback DCI that schedules a PDSCH may include the information shown below.

[Table 5-1]

- identifier for DCI formats - [1] bit

- Frequency domain resource assignment $-\lceil\lceil log_2(N_{RB}^{DL,BWP}(N_{RB}^{DL,BWP} + 1)/2)\rceil\rceil$ bits
- Time domain resource assignment - X bits
- VRB-to-PRB mapping - 1 bit.
- Modulation and coding scheme - [5] bits
- New data indicator - 1 bit
- Redundancy version - [2] bits
- HARQ process number - [4] bits
- Downlink assignment index - 2 bits
- TPC command for scheduled PUCCH - [2] bits
- PUCCH resource indicator - [2] bits
- PDSCH-to-HARQ feedback timing indicator - [3] bits

The non-fallback DCI that schedules a PDSCH may include the information shown below.

[Table 5-2]

- Carrier indicator - 0 or 3 bits
- Identifier for DCI formats - [1] bits
- Bandwidth part indicator - 0, 1 or 2 bits
- Frequency domain resource assignment

$\lceil N_{RB}^{DL,BWP}/P\rceil$ bits . For resource allocation type 0,

$\lceil log_2(N_{RB}^{DL,BWP}(N_{RB}^{DL,BWP} + 1)/2)\rceil$ . For resource allocation type 1, bits
- Time domain resource assignment -1, 2, 3, or 4 bits
- VRB-to-PRB mapping - 0 or 1 bit, only for resource allocation type 1.
  • 0 bit if only resource allocation type 0 is configured;
  • 1 bit otherwise.
- PRB bundling size indicator - 1 bit
- Rate matching indicator - 0, 1, 2 bits
- ZP CSI-RS trigger - X bits
For transport block 1:
- Modulation and coding scheme - 5 bits

(continued)

| |
| --- |
| - New data indicator - 1 bit |
| - Redundancy version - 2 bits |
| For transport block 2: |
| - Modulation and coding scheme - 5 bits |
| - New data indicator - 1 bit |
| - Redundancy version - 2 bits |
| - HARQ process number - 4 bits |
| - Downlink assignment index - 0 or 4 bits |
| - TPC command for scheduled PUCCH - 2 bits |
| - PUCCH resource indicator |
| - PDSCH-to-HARQ_feedback timing indicator - 3 bits |
| - Antenna ports - up to 5 bits |
| - Transmission configuration indication - 3 bits |
| - SRS request - 2 bits |
| - CBG transmission information - 0, 2, 4, 6, or 8 bits |
| - CBG flushing out information - 0 or 1 bit |
| - DMRS sequence initialization - 0 or 1 bit |

The DCI may be transmitted via a physical downlink control channel (PDCCH) after a channel-coding and modulation process.

A cyclic redundancy check (CRC) is added to the payload of a DCI message, and the CRC may be scrambled by a radio network temporary identifier (RNTI) corresponding to a LTE identity.

Different RNTIs may be used depending on the purpose of the DCI message, for example, UE-specific data transmission, a power control command, a random-access response, or the like. An RNTI is not explicitly transmitted, but is transmitted by being included in a CRC calculation process.

If a UE receives a DCI message transmitted on a PDCCH, the UE may identify a CRC by using an allocated RNTI. If the CRC identification result is correct, the UE may identify that the corresponding message is transmitted to the UE.

For example, a DCI that schedules a PDSCH associated with system information (SI) may be scrambled by an SI-RNTI.

A DCI that schedules a PDSCH associated with a random-access response (RAR) message may be scrambled by an RA-RNTI.

A DCI that schedules a PDSCH associated with a paging message may be scrambled by a P-RNTI.

A DCI that reports a slot format indicator (SFI) may be scrambled by an SFI-RNTI.

A DCI that reports a transmit power control (TPC) may be scrambled by a TPC-RNTI.

A DCI that schedules a UE-specific PDSCH or PUSCH may be scrambled by a cell RNTI (C-RNTI).

If a data channel, that is, a PUSCH or PDSCH, is scheduled for a specific UE via the PDCCH, data may be transmitted or received together with a DMRS within the corresponding scheduled resource region.

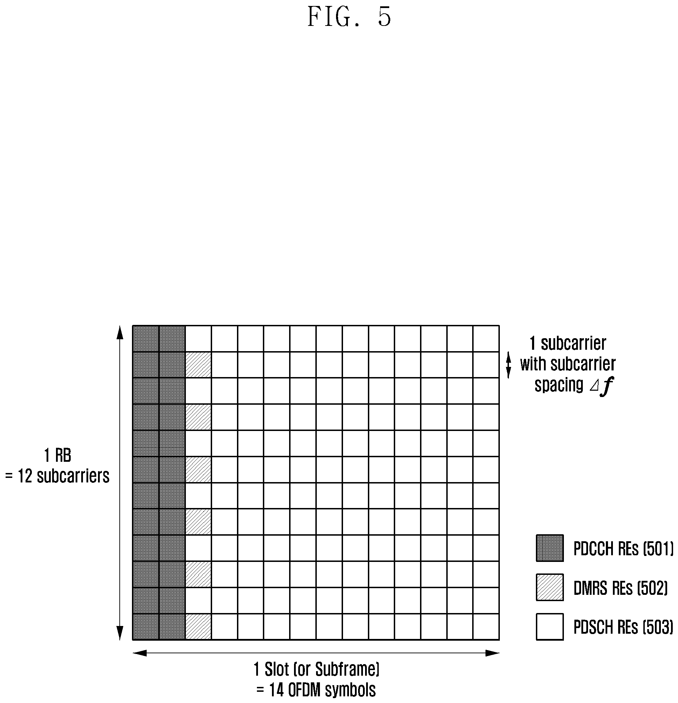

FIG. 5 illustrates a case in which a specific UE uses 14 OFDM symbols as a single slot (or subframe) in a downlink, a PDCCH is configured to be transmitted in the first two OFDM symbols, and a DMRS is configured to be transmitted in a third symbol.

In the case of FIG. 5, in a specific RB in which a PDSCH is scheduled, the PDSCH is transmitted by mapping data to REs via which a DMRS is not transmitted in a third symbol and REs from the fourth to last symbols.

A subcarrier spacing $\Delta f$ expressed in FIG. 5 is 15 kHz in the case of the LTE/LTE-A system, and one of {15, 30, 60, 120, 240, 480} kHz may be used in the case of the 5G system.

As described above, a base station needs to transmit a reference signal in order to measure a downlink channel state in a cellular system. In the case of the long-term evolution advanced (LTE-A) system of 3GPP, a LTE may measure a channel state between a base station and the UE by using a CRS or a CSI-RS transmitted by the base station.

The channel state may need to be measured in consideration of various factors, and the amount of interference in a downlink may be included in the factors.

The amount of interference in a downlink may include an interference signal generated by an antenna that belongs to a neighboring base station, thermal noise, and the like, and the amount of interference in the downlink is important when a UE determines a channel state in the downlink.

For example, in case that a base station having a single transmission antenna transmits a signal to a LTE

EP 4 319 447 A1

having a single reception antenna, the LTE needs to determine Es/Io by determining the energy per symbol capable of being received in the downlink and the amount of interference that may be simultaneously received in a duration where the corresponding symbol is received, based on a reference signal received from the base station.

The determined Ex/Io may be converted into a data rate or a value corresponding thereto, may be transmitted to the base station in the form of a channel quality indicator (CQI), and may be used when the base station determines the data rate to be used for transmission to the UE.

In the case of the LTE-A system, a UE feeds back information associated with a channel state of a downlink to a base station, and thus the base station may utilize the same for downlink scheduling. That is, the LTE measures the reference signal that the base station transmits in the downlink, and feeds back, to the base station, information extracted from the measured reference signal in a form defined in the LTE/LTE-A standard. As described above, the information that the UE feeds back in LTE/LTE-A is referred to as channel state information, and the channel state information may include the following three pieces of information.

Rand indicator (RI): indicates the number of spatial layers that a LTE is capable of receiving in the current channel state.

Precoding matrix indicator (PMI): an indicator associated with a precoding matrix that a UE prefers in the current channel state.

Channel quality indicator (CQI): indicates the maximum data rate that a UE is capable of receiving in the current channel state.

The CQI may be replaced by a signal-to-interference-plus-noise ratio (SINR), a maximum error correction code rate and modulation scheme, a data efficiency per frequency, or the like, which may be utilized in a manner similar to a maximum data rate.

The RI, PMI, and CQI have meaning in relation to each other. For example, a precoding matrix supported in LTE/LTE-A may be defined differently for each rank. Therefore, a PMI value X when an RI is 1 and a PMI value X when an RI is 2 may be interpreted to be different. In addition, a LTE determines a CQI on the assumption that a PMI and X that the LTE reports to a base station are applied in the base station. That is, reporting RI_X, PMI_Y, and CQI_Z by a UE to the base station may correspond to reporting that the UE is capable of performing reception at a data rate corresponding to CQI_Z when a rank is RI_X and a PMI is PMI_Y. As described above, a LTE calculates a CQI on the assumption of a transmission scheme to be performed with respect to a base station, and thus the LTE may obtain the optimal performance when the LTE actually executes transmission using the corresponding transmission scheme.

In LTE/LTE-A, the RI, PMI, and CQI, which are channel state information that a UE feeds back, may be fed back periodically or aperiodically. In the case in which a base station desires to aperiodically obtain channel state information of a specific UE, the base station may configure an aperiodic feedback (or aperiodic channel state information reporting) to be performed using an aperiodic feedback indicator (or a channel-state information request field or channel-state information request information) included in downlink control information (DCI) for the LTE. In addition, when the UE receives an indicator configured to perform aperiodic feedback, in an nth subframe, the LTE may perform uplink transmission by including aperiodic feedback information (or channel state information) in data transmission in an (n+k)th subframe. Here, k is a parameter defined in the 3GPP LTE Release 11 standard, which is 4 in frequency-division duplexing (FDD) and may be defined as shown in Table 6 in the case of time-division duplexing (TDD).

[Table 6] Value of k for each subframe number n in TDD UL/DL configuration

| TDD UUDL Configuration | subframe number $n$ | | | | | | | | | |
|---|---|---|---|---|---|---|---|---|---|---|
| | 0 | 1 | 2 | 3 | 4 | 5 | 6 | 7 | 8 | 9 |
| 0 | - | - | 6 | 7 | 4 | - | - | 6 | 7 | 4 |
| 1 | - | - | 6 | 4 | - | - | - | 6 | 4 | - |
| 2 | - | - | 4 | - | - | - | - | 4 | - | - |
| 3 | - | - | 4 | 4 | 4 | - | - | - | - | - |
| 4 | - | - | 4 | 4 | - | - | - | - | - | - |
| 5 | - | - | 4 | - | - | - | - | - | - | - |
| 6 | - | - | 7 | 7 | 5 | - | - | 7 | 7 | - |

In the case in which aperiodic feedback is configured, feedback information (or channel state information) may include an RI, a PMI, and a CQI, and the RI and the PMI may not be fed back depending on a feedback configuration (or channel state report configuration).

Hereinafter, embodiments of the disclosure will be described in detail with reference to the accompanying drawings. In addition, although an embodiment of the disclosure is described with reference to an LTE or LTE-A system as an example, the embodiment of the disclosure may be applicable to other communication systems that have a similar technical background or a similar channel type. For example, fifth-generation mobile communication technology (5G, new radio (NR)) or sixth-generation mobile technology developed after LTE-A may be included. In addition, embodiments of the disclosure may be modified by those skilled in the art without departing from the scope of the disclosure, and may be applied to other communication systems.

A physical random access channel (PRACH) in existing LTE or NR is designed to be suitable for an environment in which the symbol length of a signal is much larger than the maximum round-trip delay (RTD) of a cell. The base station may perform distinguishment of each terminal and estimation of a preamble signal delay by using a preamble sequence received through the PRACH. On the other hand, a wireless communication system using an ultra-high frequency band such as a tera-hertz (THz) or sub-THz band may use a waveform having a very large subcarrier spacing, that is, a very small symbol length, due to extreme phase noise. Therefore, a PRACH preamble sequence design that simply extends an existing LTE or NR method in a mobile communication system of an ultra-high frequency band may have limitations in use.

Accordingly, the disclosure proposes a new PRACH preamble signal design suitable for the ultra-high frequency band including THz and sub-THz frequency domains and a technology for transmitting and receiving the same. This includes a method for generating and transmitting a PRACH preamble sequence for random access by a terminal, a method for receiving the PRACH preamble sequence by a base station so as to estimate the RTD of a signal for timing-advance (TA) feedback, and a method for detecting the ID of a preamble generated by the terminal. The proposed technology enables the base station to estimate the RTD of the preamble signal while distinguishing each terminal, even in an environment where the symbol length of the preamble signal is very short compared to the maximum RTD of the cell.

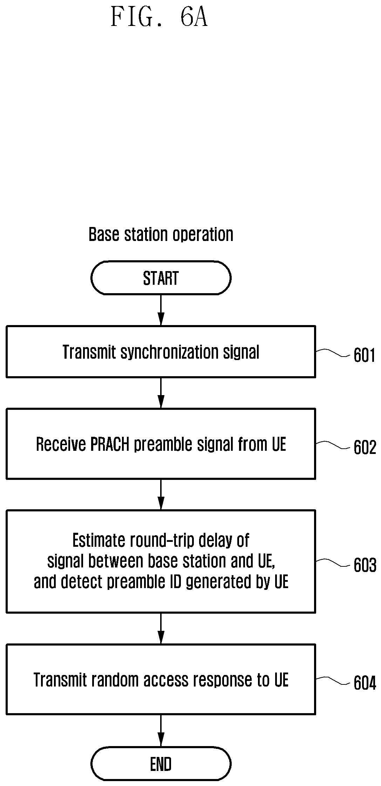

FIG. 6A is a flowchart illustrating a basic operation of a base station for receiving a PRACH preamble signal.

Referring to FIG. 6A, a base station according to an embodiment of the disclosure may transmit a synchronization signal to a plurality of UEs (operation 601). Here, the synchronization signal may include, for example, a primary synchronization signal (PSS), a secondary synchronization signal (SSS), and a physical broadcast channel (PBCH).

In addition, the base station may receive a random access preamble signal from the UE through the PRACH resource (operation 602). When the random access preamble signal is received as described, the base station may identify an identifier (ID) for the LTE based on the random access preamble signal, and determine a timing advance (TA) value for a LTE through estimation of the round trip delay (RTD) between the base station and the UE (operation 603).

In addition, the base station may transmit a random access response including the TA value determined as such to the identified LTE (operation 604).

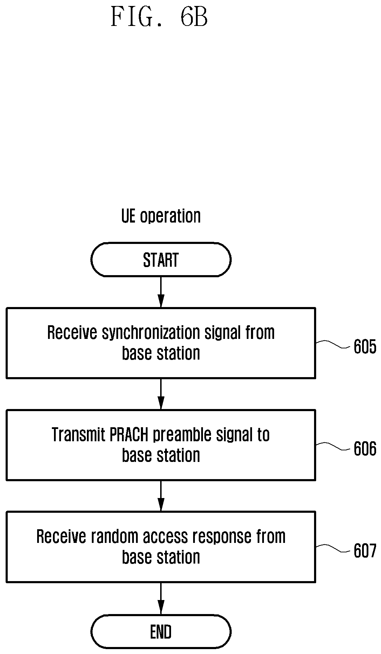

FIG. 6B is a flowchart illustrating a basic operation of a LTE for transmitting a PRACH preamble signal.

Referring to FIG. 6B, upon receiving a synchronization signal transmitted by a base station (operation 605), the LTE may adjust downlink synchronization accordingly and transmit a random access preamble to the base station through PRACH resources (operation 606).

Thereafter, when a random access response is received from the base station in response to transmitting the random access preamble (operation 607), the UE may apply a TA value included in the random access response to transmit a message for access to the base station based on uplink grant included in the random access response.

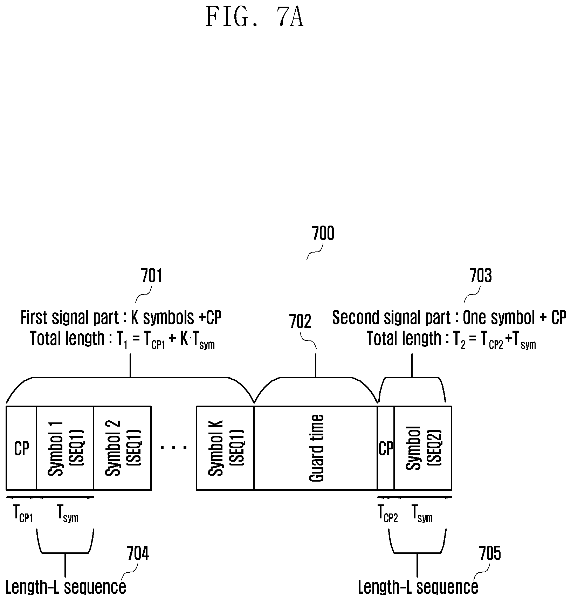

FIG. 7A illustrates a basic structure of a PRACH preamble signal transmitted by a UE.

Referring to FIG. 7A, a PRACH preamble signal 700 may include a first signal part 701 having a total length of $T_1$ and consisting of K identical OFDM symbols and a cyclic prefix (CP) having a length of $T_{CP1}$, a guard time 702 having a total length of $T_{GT}$, and a second signal part 703 having a total length of $T_2$ and consisting of one OFDM symbol and a CP. In each symbol, a sequence of length L may be arranged (indicated by reference numerals 704 and 705).

First, in the case of the first signal part, the length of the sum of the lengths of the previous (K-1) symbols and the length of the CP of the first signal part, i.e., the length of $T_{CP1} + (K-1) \cdot T_{sym}$ is typically configured as a value equal to or greater than the maximum RTD of a cell, or configured as a value equal to or greater than the sum of the maximum RTD of the cell and the maximum delay spread of the cell.

Here, $T_{sym}$ may indicate the length of the OFDM symbol, and the relationship between $T_{sym}$ and the subcarrier

$$T_{sym} = \frac{1}{\Delta f}$$

spacing $\Delta f$ of the system may generally be represented by . In addition, each OFDM symbol consists of $L$ discrete-time samples, where $L$ may denote the size of the IDFT to generate the OFDM symbol or the length of a sequence to be generated.

In other words, in a situation in which a value of the subcarrier spacing of the system or a value of $T_{sym}$ is given, the length of the first signal part, i.e., the value of K and the value of $T_{CP1}$ may be determined by a target maximum RTD value, i.e., a target maximum distance. Here, the length $T_1$ of the first signal part and the maximum distance corresponding to the maximum measurable RTD corresponding thereto may have the relationship shown in the following mathematical expression.

$$\frac{1}{2} c \times T_1$$

In the above mathematical expression, $c$ denotes the speed of light (3*10^8 m/s).

Here, the CP of the first signal part may use a signal obtained by replicating the latter part of one of the K identical symbols of the first signal part. In addition, the length $T_{CP1}$ of the CP of the first signal part may be configured as a value between 0 and $T_{sym}$ by considering the maximum RTD of a cell, and may use a signal obtained by replicating the latter part of each symbol of the first signal part. Here, a sequence of length L arranged in K symbols included in the first signal part 701 is referred to as SEQ1 and may be represented by s1[0], s1[1], ..., s1[L-1].

Next, for the second signal part 703, the CP length $T_{CP2}$ may be configured by considering the delay spread value of the cell. For example, the value of $T_{CP2}$ may be configured as a value equal to or greater than the delay spread value of the cell. Here, a sequence of length L arranged on the symbol included in the second signal part is referred to as SEQ2 and may be represented by s2[0], s2[1], ..., s2[L-1].

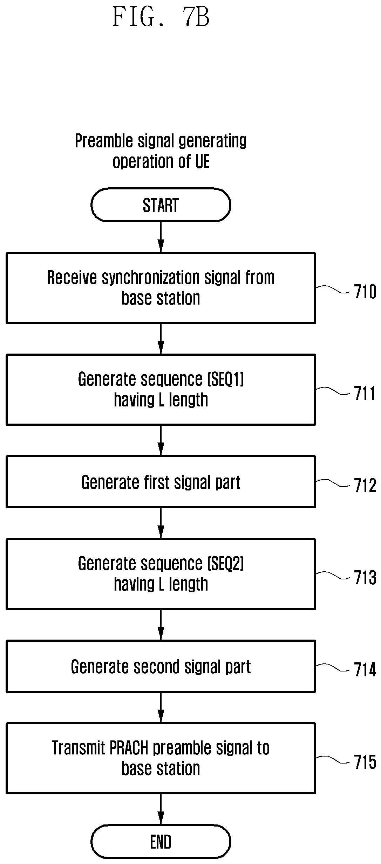

FIG. 7B illustrates a LTE operation of generating a PRACH preamble signal according to the disclosure.

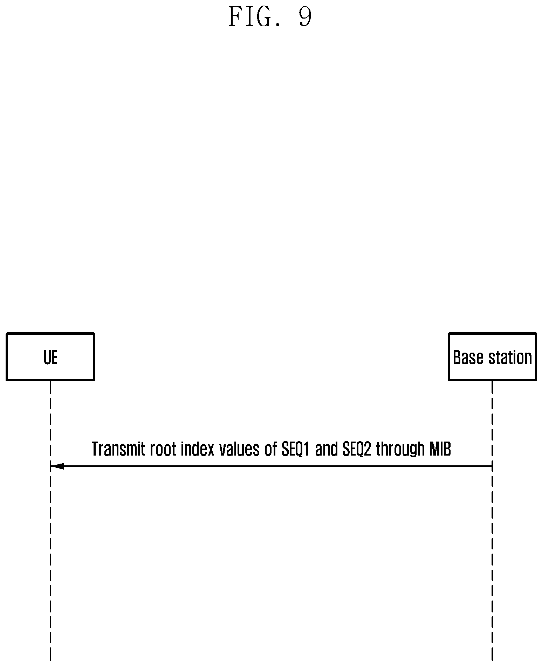

Referring to FIG. 7B, in the disclosure, a LTE may receive a synchronization signal from a base station (operation 710), and the LTE may obtain sequence information in a corresponding cell based on the synchronization signal and then generate a sequence (SEQ1) having a length of L by using the sequence information (operation 711). A method of obtaining sequence information in the disclosure will be described later through FIGS. 9 to 11. Subsequently, the LTE may generate a first signal part based on the generated SEQ1 (operation 712). In addition, the UE may generate a sequence (SEQ2) having a length of L based on the obtained sequence information in the corresponding cell (operation 713). Subsequently, the LTE may generate a second signal part based on the generated SEQ2 (operation 714). Thereafter, the LTE may transmit the generated PRACH preamble signal to the base station (operation 715).

In addition, SEQ1 and SEQ2 generated by the LTE may be sequences having good cyclic correlation characteristics so that the base station can easily detect the preamble and estimate the RTD.

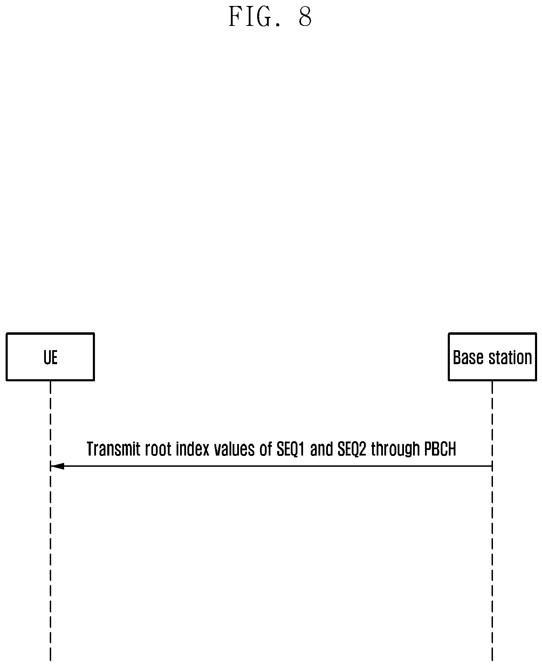

FIGS. 8 to 10 relate to various embodiments in which a LTE according to an embodiment of the disclosure acquires sequence information for generating SEQ1 and SEQ2.

First, in an embodiment of the disclosure, for example, a Zadoff-Chu (ZC) sequence having a length of L may be used for SEQ1 and SEQ2 having a length of L. At this time, the UE may generate a ZC sequence by using sequence information. Here, the sequence information may be cell-specifically determined as, for example, a root index value, and UEs within a cell may generate ZC sequences by using different root index values. The UE may obtain, from a base station, a set $I_1$ of root indexes for generating SEQ1, and may obtain, from the base station, a set $I_2$ of root indexes for generating SEQ2. The LTE may randomly select a root index for generating SEQ1 and SEQ2 from the obtained sets $I_1$ and $I_2$, and the root index may be used for identifying the UE ID by the base station. In an embodiment, the LTE may obtain, from the base station, a set of time/frequency resources for transmitting a preamble signal. The UE may randomly select a resource from the set of time/frequency resources for transmitting the preamble signal to transmit the preamble signal by using the selected resource.

The UE may receive such sequence information (e.g., the cell-specific root index) and resource information via a physical broadcast channel (PBCH) of a synchronization signal transmitted by the base station, as illustrated in FIG. 8 in an embodiment.

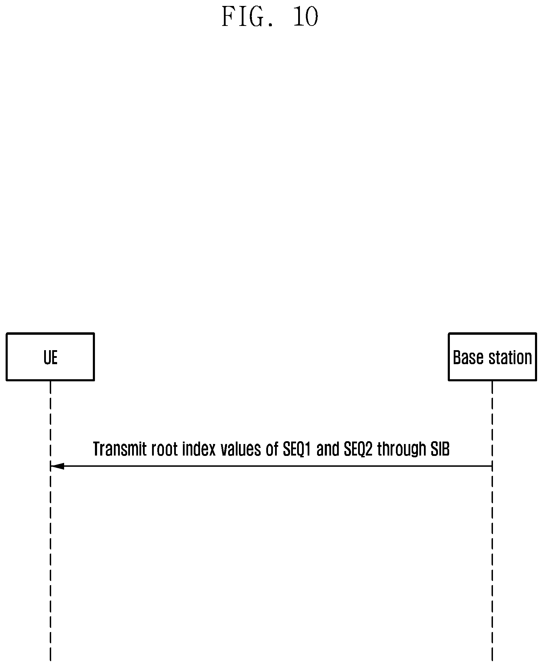

In another embodiment, the LTE may receive the sequence information (information about the root index) and resource information through a master information block (MIB) as shown in FIG. 9, or through a system information block (SIB) as shown in FIG. 10.

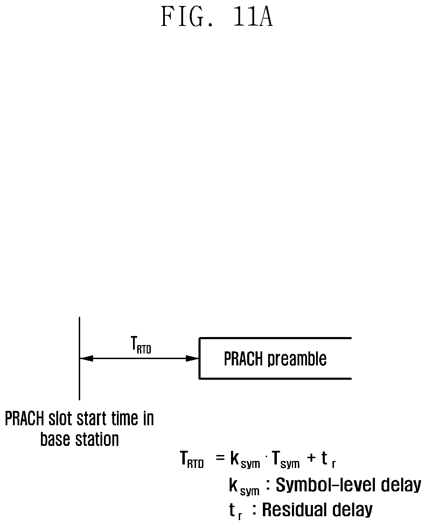

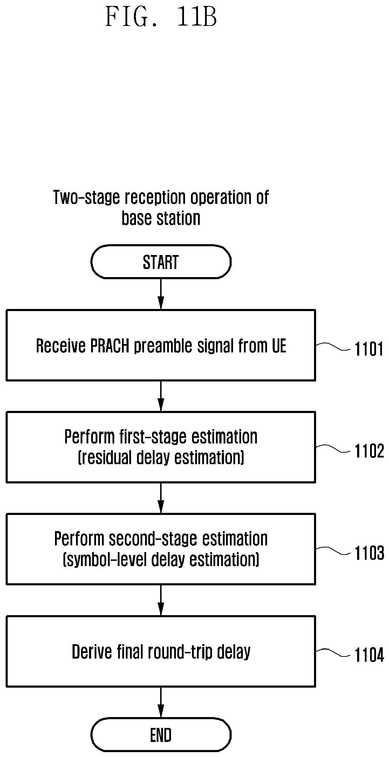

Meanwhile, FIGS. 11A and 11B illustrate the basic principle in which a base station receives a preamble transmitted by a UE so as to estimate an RTD value of the signal, i.e., a value of $T_{RTD}$ in an embodiment of the disclosure.

Referring to FIG. 11A, the preamble signal transmitted by the UE is received by the base station with a delay equal to $T_{RTD}$ from the start time of the PRACH slot of the base station. As previously described, in a communication system to which the disclosure applies, $T_{RTD}$ may have a value greater than the symbol length, and thus may be expressed as follows. In the following mathematical expression, $k_{sym}$ is an integer equal to or greater than 0, and may be referred to as symbol-level delay. In addition, $t_r$ is a real number equal to or greater than 0, and may be referred to as residual-delay. However, the residual-delay or symbol-level delay is merely named as an example for explanation and does not limit the scope of the disclosure, and it should be noted that the residual-delay or symbol-level delay may also be generalized and referred to as any name that can be interpreted as having the same technical meaning, for example, first delay time or second delay time.

$$T_{RTD} = k_{sym} \cdot T_{sym} + t_r$$

For reference, the above mathematical expression expresses the delay value as a real number in absolute time, and it is also possible to express the delay value as a sample unit in a discrete time-domain, as shown below.

$$N_{RTD} = k_{sym} \cdot N_{sym} + n_r$$

Here, the parameters of the above two equations may have the following relationship.

$$N_{RTD} = \left\lceil T_{RTD} \frac{L}{T_{sym}} \right\rceil, n_r = \left\lceil T_r \frac{L}{T_{sym}} \right\rceil$$

Here, $L$ may denote the size of the IDFT to generate the OFDM-based signal, or the length of the sequence to be generated.

Referring to FIG. 11B, a method for calculating a value of $T_{RTD}$ according to an embodiment of the disclosure is described as follows.

First, a base station may receive a PRACH preamble signal from the LTE (operation 1101). Thereafter, the base station may perform a two-stage estimation operation to estimate the $T_{RTD}$ value of the signal from the received preamble signal. In the first estimation operation, the base station may estimate the residual delay, i.e., a value of $t_r$ (operation 1102), and in the second-stage estimation operation, the base station may estimate the symbol-level delay, i.e., a value of $k_{sym}$ (operation 1103). Finally, the base station may derive the $T_{RTD}$ value according to the formula $T_{RTD} = k_{sym} \cdot T_{sym} + t_r$ by using the $t_r$ value and the $k_{sym}$ value estimated in the above two-stage estimation process (operation 1104).

To derive the RTD value using the two-stage estimation operation, the base station may generate a first correlation signal used in the first-stage estimation operation and a second correlation signal used in the second-stage estimation operation. In an embodiment, the first correlation signal to be generated may be ZC sequences made of the root indexes in the set $I_1$ of root indexes, and the second correlation signal may be ZC sequences made of the root indexes in the set $I_2$ of root indexes.

Next, based on the preamble structure proposed by the disclosure shown in FIG. 7 and the RTD estimation operation of the base station shown in FIGS. 11A and 11B, specific embodiments of the structure of the preamble signal transmitted by a LTE to a base station, a preamble signal reception operation of a base station using the structure of each preamble signal, and RTD value estimation operation according thereto will be described below.

<First Embodiment>

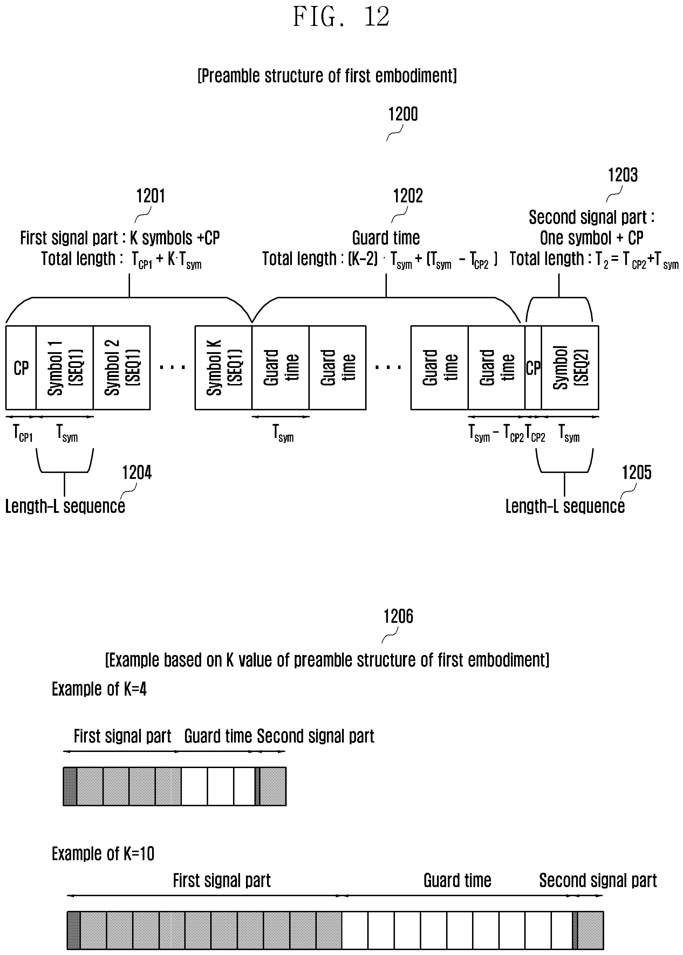

FIG. 12 illustrates the structure of a preamble generated by a LTE according to a first embodiment.

Referring to FIG. 12, in a first embodiment of the disclosure, a PRACH preamble signal 1200 may include a first signal part 1201 having a total length of $T_1$ and consisting of K identical OFDM symbols and a cyclic prefix (CP) having a length of $T_{CP1}$, a guard time 1202 having a total length of $T_{GT}$, and a second signal part 1203 having a total length of $T_2$ and consisting of one OFDM symbol and a CP. In each symbol configuring the first signal part 1201, a sequence of length L may be arranged (indicated by reference numeral 1204). A sequence SEQ2 having a length L may be arranged in each symbol configuring the second signal part 1202 (indicated by reference numeral 1205). In the case of the first signal part, the sum of the lengths of the previous (K-1) symbols and the length of the CP of the first signal part, i.e., the length of $T_{CP1} + (K-1) \cdot T_{sym}$ may be configured as a value equal to or greater than the maximum RTD of a cell, or configured as a value equal to or greater than the sum of the maximum RTD of the cell and the maximum delay spread of the cell. Here, the CP of the first signal part may use a signal obtained by replicating the latter part of one of the K identical symbols of the first signal part. In addition, the length $T_{CP1}$ of the CP of the first signal part may be configured as a value between 0 and $T_{sym}$ by considering the maximum RTD of a cell, and may use a signal obtained by replicating the latter part of each symbol of the first signal part. Here, a sequence of length L arranged in K symbols included in the first signal part 1201 is referred to as SEQ1 and may be represented by s1[0], s1[1], ..., s1[L-1]. Next, in the case of the second signal part 1203, the CP length $T_{CP2}$ may be configured by considering the delay spread value of the cell. For example, the value of $T_{CP2}$ may be configured as a value equal to or greater than the delay spread value of the cell. Here, a sequence of length L arranged on the symbol included in the second signal part is referred to as SEQ2 and may be represented by s2[0], s2[1], ..., s2[L-1].

In the first embodiment of the disclosure, the length of the guard time between the first signal part and the second signal part may be $T_{GT}=(K-2) \cdot T_{sym}+(T_{sym}-T_{CP2})$ (indicated by reference numeral 1202). In FIG. 12, an example of the cases where K=4 and K=10 is shown (indicated by reference numeral 1206), but this is for illustrative purposes only and does not limit the scope of the disclosure. That is, K may be configured to be a random value, for example, depending on the maximum RTD value of the cell, the sum of the lengths of the previous (K-1) symbols of the first signal part and the length of the CP of the first signal part, i.e., the length of $T_{CP1} + (K-1) \cdot T_{sym}$ may be determined to be equal to or greater than the maximum RTD of the cell. In an embodiment, in order to reduce the time resource overhead, the value of K may be determined as the smallest integer value satisfying the above conditions. However, the method of determining the value of K in the disclosure is not limited thereto.

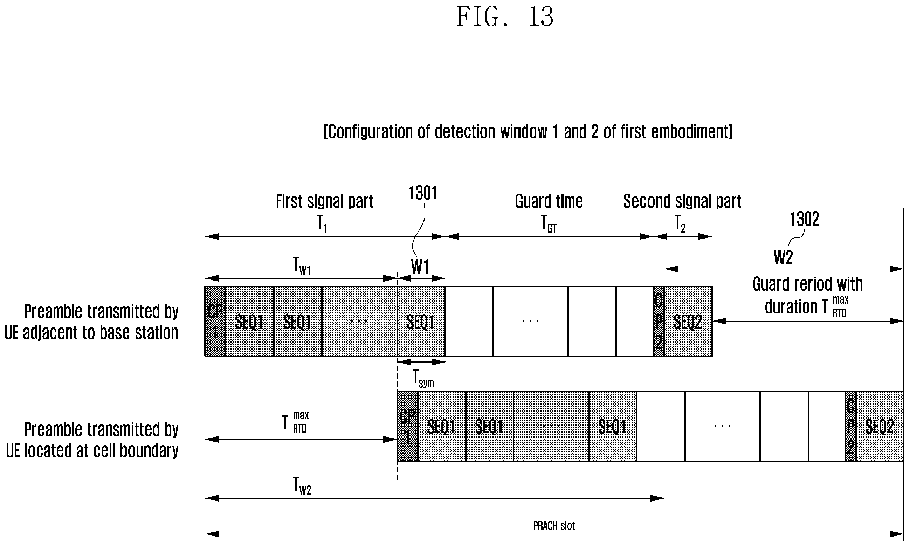

FIG. 13 illustrates a detection window for detecting a preamble signal by a base station according to a first embodiment of the disclosure.

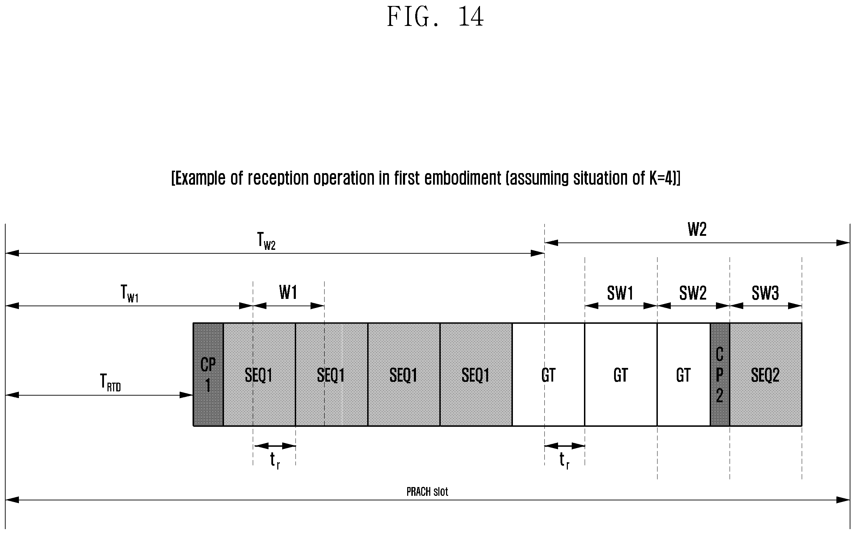

Referring to FIG. 13, a base station according to the first embodiment of the disclosure may configure a detection window 1 (W1) 1301 and a detection window 2 (W2) 1302 for detecting a preamble signal transmitted from a LTE. Here, W1 may be a minimum interval for detecting the preamble signal in the first-stage estimation operation of the base station to estimate whether the UE is attempting random access and the residual delay value of a received signal. The length of W1 may be configured as, for example, a length of $T_{sym}$ of one symbol length, as shown in FIG. 13, and the starting position of W1 may be configured as, for example, a position being spaced a length of $T_{W1} =(K-1) \cdot T_{sym} +T_{CP1}$ apart from the start point of the PRACH slot in which the PRACH preamble is received. Here, the length of $T_{W1}=(K-1) \cdot T_{sym}+T_{CP1}$ may generally correspond, for example, to a value, e.g., the maximum RTD value of a cell, that is, $T_{RTD}^{\max}$ value. Further, the detection window 2 (W2) 1302 may be an interval for estimating a symbol-level delay value of the received preamble signal in the second-stage estimation operation of the base station. The length of W2 may be configured as a length of $(K+1) \cdot T_{sym}$, for example, as shown in FIG. 14, and the starting position of W2 may be configured as, for example, a position being spaced a length of $(K-1) \cdot T_{sym}$ apart from the position where detection window 1 ends, or a position being spaced $T_{W2} = T_{CP1} +(2K-1) \cdot T_{sym}$ apart from the start point of the PRACH slot in which the PRACH preamble is received.

FIG. 14 illustrates an example of a preamble reception operation of a base station according to a first embodiment of the disclosure.

With reference to FIG. 14, a residual delay estimation operation through first-stage estimation performed in W1 and a symbol-level delay estimation operation through second-stage estimation performed in W2 according to the first embodiment will be described. For ease of explanation, FIG. 14 illustrates, as an example, a situation in which a preamble signal having a structure corresponding to K=4 is generated and the preamble is received with a specific value of RTD by a base station.

Referring to the example of FIG. 14, in a first embodiment, when a base station receives a preamble signal from a LTE, the base station may perform a first-stage estimation as described below. The base station may perform a cyclic correlation between a signal received in the configured W1 and the first correlation signals generated as described above, and detect a peak value among the magnitudes of the resulting values obtained by performing the cyclic correlation. The base station may estimate whether the LTE attempts random access, a root index of SEQ1 generated by the UE, and a residual delay value of the preamble signal through the root index of the first correlation signal, for which the peak value is detected, among the first correlation signals and the location in which the peak value is detected. At this time, the cyclic correlation performed by the base station may be expressed in the time-domain by the following equation.

$$z_{i_1}[l] = \frac{1}{\sqrt{L}} \sum_{n=0}^{L-1} y[n]x_{i_1}^{*}[(n-l) \bmod L]$$

Here, $y[n]$ denotes a signal received by the base station within W1, $x_{i_1}[n]$ denotes a first correlation signal ($i_1 \in I_1$), and $z_{i_1}[l]$ denotes the result value of the cyclic correlation. The above-mentioned peak value may be defined as being detected when the magnitude of $z_{i_1}[l]$ or the square value of the magnitude is greater than a certain threshold value $\beta$. The base station may determine, through the index of $i_1$ for which the peak value is detected among the first correlation signals, that the UE has generated SEQ1 through the root index corresponding to $i_1$, and use the same to identify the UE ID. In addition, the location in which the peak value is detected may imply the value of $l$ by which the $z_{i_1}[l]$ has a peak value. Furthermore, the base station according to the first embodiment may, for example, in case that the cyclic correlation value of the ZC sequence included in the first signal part is configured as zero, estimate the estimation value of the residual delay defined above, as $t_r = \dfrac{l}{L\Delta f} = \dfrac{l}{L} T_{sym}$ or $n_r = l$, by using the corresponding value of $l$. Here, $\Delta f$ refers to the subcarrier spacing of the system. Additionally, the above cyclic correlation may also be performed in the frequency domain as shown in the following equation. $Z_{i_1}[k] = Y[k]X_{i_1}^*[k]$, $k = 0, 1, ..., L - 1$.

Here, $\{Y[k]\}_{k=0}^{L-1} \triangleq \mathrm{DFT}\{y[l]\}_{l=0}^{L-1}$ , $\{X_{i_1}[k]\}_{k=0}^{L-1} \triangleq \mathrm{DFT}\{x_{i_1}[l]\}_{l=0}^{L-1}$ . The DFT operation here may also be performed via a low complexity IFFT.

Next, referring to the example of FIG. 14, after performing the above first-stage estimation, the base station may perform the second-stage estimation as described below. By referring to the residual delay value of the received preamble signal estimated in the first-stage estimation, the base station may configure K sub-windows (SW) for generating the second correlation signal from the starting point of W2 in order to perform the second-stage estimation.

Here, each SW may have a length of one symbol, that is, a length of $T_{sym}$. Specifically, the position of the first SW (SW1) may be configured to be spaced apart by an offset corresponding to the residual delay value, estimated in the first-stage estimation, from the starting point of W2, and the positions of the remaining (K-1) SWs may be configured to be sequentially spaced apart by one symbol with reference to the first SW. The base station may perform correlation within each of the configured K SWs using the second correlation signals generated above, and generate a correlation result value $c_1, c_2, ..., c_K$ on each SW. Here, $c_1, c_2, ..., c_K$ may be calculated as $c_k = \left| \frac{1}{\sqrt{L}} \sum_{n=0}^{L-1} y_k[n] x_{i_2}^*[n] \right|^2$ or $c_k = \left| \frac{1}{\sqrt{L}} \sum_{n=0}^{L-1} y_k[n] x_{i_2}^*[n] \right|$ . Here, $y_k[n]$ denotes a signal received on the kth SW, and $x_{i_2}[n]$ denotes a second correlation signal ($i_2 \in I_2$). In addition, the base station according to the first embodiment may perform an estimation of the above-defined symbol-level delay based on the value in which a peak value is detected among the values of $c_1, c_2, ..., c_K$. Specifically, the base station may determine that the peak value has been detected in case that each of the values $c_1, c_2, ..., c_K$ is equal to or greater than a certain threshold value $\beta$. The base station may determine, through the index of $i_2$ for which the peak value is detected among the second correlation signals, that the LTE has generated SEQ2 through the root index corresponding to $i_2$, and use the same to identify the UE ID. In addition, in case that a peak value is detected at $c_k$, the base station may determine the estimation value of the symbol-level delay defined above as $k_{sym} = (k-1)$. For reference, the example shown in FIG. 14 illustrates a situation in which a peak value is detected at $c_3$ and the estimation value of the symbol-level delay is determined to be $k_{sym} = 2$.

Finally, the base station according to the first embodiment may derive $T_{RTD} = k_{sym} \cdot T_{sym} + t_r$, which is a final RTD value of the received preamble signal, or $N_{RTD} = k_{sym} \cdot N_{sym} + n_r$, which is a final RTD value in the units of samples, by using the residual delay $t_r$ or $n_r$ value estimated in the first-stage estimation and the symbol-level delay $k_{sym}$ value estimated in the second-stage estimation.

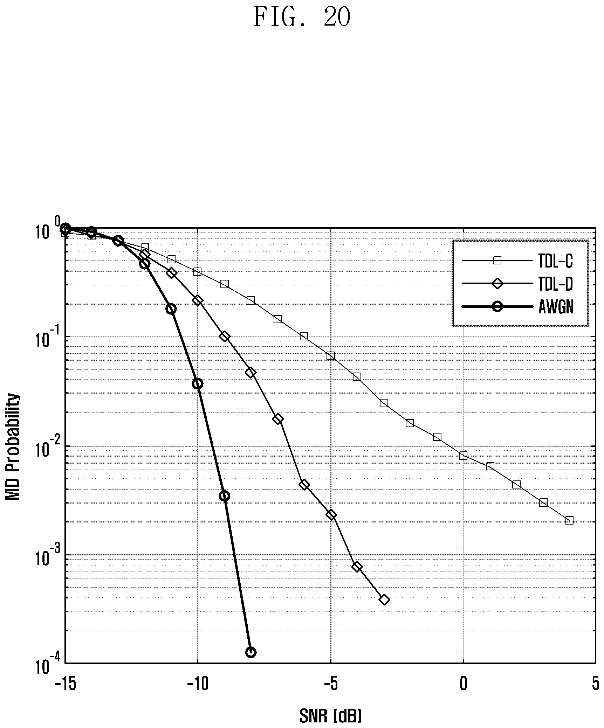

FIG. 20 illustrates simulation results obtained by evaluating reception performance (missed-detection (MD) probability) of a preamble signal according to the first embodiment.

In this simulation, the following ultra-high frequency band situations have been configured in various channel model environments (AWGN, tapped delay line (TDL) model C (non-line-of-sight), TDL model D (line-of-sight)). The carrier frequency is 140 GHz, the subcarrier spacing is 3.2 MHz, the sequence length L is 139, and the sequence root index value is configured to be $i_1 = i_2 = 1$ and $K = 1$, $T_{CP1} = 0$, $T_{CP2} = 21$ ns. For reference, the maximum distance corresponding to the maximum RTD in this simulation environment is given as 421.875 meters. In addition, the threshold $\beta$ value has been configured to be 0.001. According to the simulation results, the preamble of the structure proposed by the disclosure has an MD probability value of a performance that generally meets the reception requirements. Note that the environment or configuration used in the simulation of FIG. 20 is for illustrative purposes only and is not intended to limit the environment or configuration to which the disclosure is applicable.

<Second Embodiment>

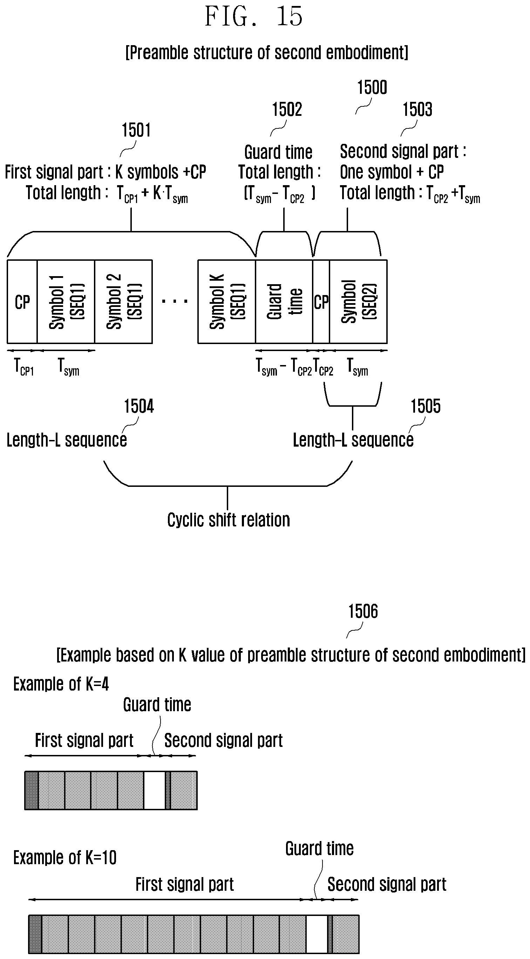

FIG. 15 illustrates a structure of a preamble generated by a LTE according to a second embodiment.

Referring to FIG. 15, in a second embodiment of the disclosure, a PRACH preamble signal 1500 may include a first signal part 1501 having a total length of $T_1$ and consisting of K identical OFDM symbols and a cyclic prefix (CP) having a length of $T_{CP1}$, a guard time 1502 having a total length of $T_{GT}$, and a second signal part 1503 having a total length of $T_2$ and consisting of one OFDM symbol and a CP. In each symbol configuring the first signal part 1501, a sequence SEQ1 having a length L may be arranged (indicated by reference numeral 1504). A sequence SEQ2 having a length L may be arranged in each symbol configuring the second signal part 1502 (indicated by reference numeral 1505). In the case of the first signal part, the sum of the lengths of the previous (K-1) symbols and the length of the CP of the first signal part, i.e., the length of $T_{CP1} + (K-1) \cdot T_{sym}$ may be configured as a value equal to or greater than the maximum RTD of a cell, or configured as a value equal to or greater than the sum of the maximum RTD of the cell and the maximum delay spread of the cell. Here, the CP of the first signal part may use a signal obtained by replicating the latter part of one of the K identical symbols of the first signal part. In addition, the length $T_{CP1}$ of the CP of the first signal part may be configured as a value between 0 and $T_{sym}$ by considering the maximum RTD of a cell, and may use a signal obtained by replicating the latter part of each symbol of the first signal part. Here, a sequence of length L arranged in K symbols included in the first signal part 1501 is referred to as SEQ1 and may be represented by s1[0], s1[1], ..., s1[L-1]. Next, in the case of the second signal part 1503, the CP length $T_{CP2}$ may be configured by considering the delay spread value of the cell. For example, the value of $T_{CP2}$ may be configured as a value equal to or greater than the delay spread value of the cell. Here, a sequence of length L arranged on the symbol included in the second signal part is referred to as SEQ2 and may be represented by s2[0], s2[1], ..., s2[L-1].

In the second embodiment of the disclosure, the length of the guard time between the first signal part and the second signal part may be $T_{GT} = T_{sym} - T_{CP2}$ (indicated by reference numeral 1502). In other words, unlike the first embodiment, the preamble structure of the second embodiment is characterized by a constant length of guard time even when the value of K varies, and thus may have less time resource overhead than that of the first embodiment. In FIG. 15, an example of the cases where K=4 and K=10 is shown (indicated by reference numeral 1506), but this is for illustrative purposes only and does not limit the scope of the disclosure. That is, K may be configured to be a random value, for example, depending on the maximum RTD value of the cell, the sum of the lengths of the previous (K-1) symbols of the first signal part and the length of the CP of the first signal part, i.e., the length of $T_{CP1} + (K-1) \cdot T_{sym}$ may be determined to be equal to or greater than the maximum RTD of the cell. In an embodiment, in order to reduce the time resource overhead, the value of K may be determined as the smallest integer value satisfying the above conditions. However, the method of determining the value of K in the disclosure is not limited thereto.

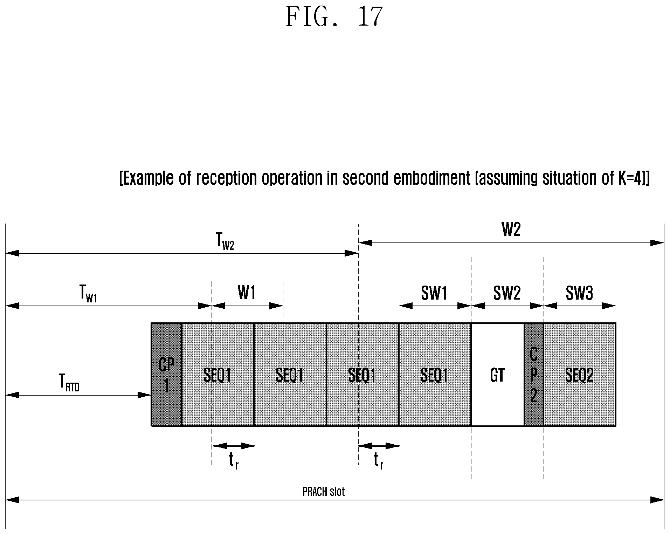

Furthermore, in the second embodiment of the disclosure, the sequences of length L included in the first signal part and the second signal part may be sequences having different cyclic shifts of ZC sequences generated with the same root-index. This is a design feature to eliminate ambiguity between the first signal part and the second signal part that may be caused by a guard time that is shorter than the guard time in the preamble structure of the first embodiment in a second-stage estimation to be described later with reference to FIG. 17.

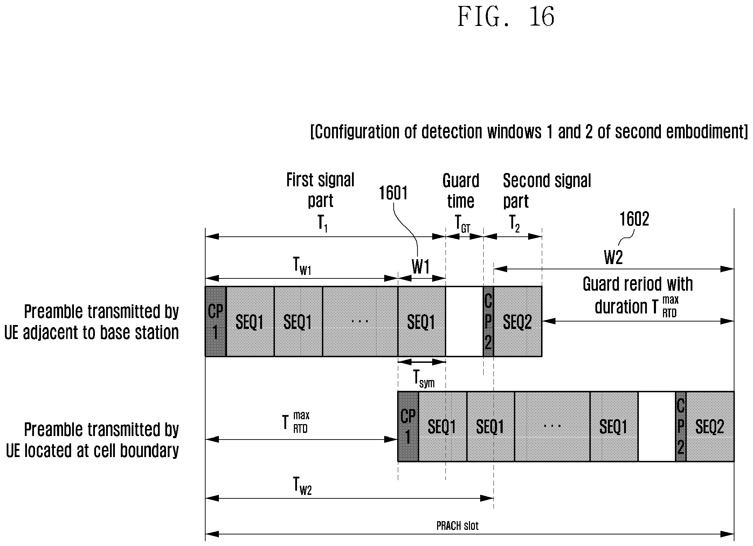

FIG. 16 illustrates a detection window for detecting a preamble signal at a base station according to the second embodiment.

Referring to FIG. 16, a base station according to the second embodiment of the disclosure may configure a detection window 1 (W1) 1601 and a detection window 2 (W2) 1602 for detecting a preamble signal transmitted from a UE. Here, W1 may be a minimum interval for detecting the preamble signal in the first-stage estimation operation of the base station to estimate whether the UE is attempting random access and the residual delay value of a received signal. The length of W1 may be configured as, for example, a length of $T_{sym}$ of one symbol length, as shown in FIG. 16, and the starting position of W1 may be configured as, for example, a position being spaced a length of $T_{W1} = (K-1) \cdot T_{sym} + T_{CP1}$ apart from the starting point of the PRACH slot in which the PRACH preamble is received. Here, the length of $T_{W1} = (K-1) \cdot T_{sym} + T_{CP1}$ may generally correspond, for example, to a value, e.g., the maximum RTD value of a cell, that is, $T_{RTD}^{\max}$ value. Further, the detection window 2 (W2) 1602 may be an interval for estimating a symbol-level delay value of the received preamble signal in the second-stage estimation operation of the base station. The length of W2 may be configured as a length of $(K+1) \cdot T_{sym}$, for example, as shown in FIG. 17, and the starting position of W2 may be configured as, for example, a position being spaced a length of $T_{sym}$ apart from the position where detection window 1 ends, or a position being spaced $T_{W2} = T_{CP1} + (K+1) \cdot T_{sym}$ apart from the starting point of the PRACH slot in which the PRACH preamble is received.

FIG. 17 illustrates an example of a preamble reception operation of a base station according to a second embodiment. With reference to FIG. 17, a residual delay estimation operation through first-stage estimation performed in W1 and a symbol-level delay estimation operation through second-stage estimation performed in W2 according to the second embodiment will be described. For ease of explanation, FIG. 17 illustrates, as an example, a situation in which a preamble signal having a structure corresponding to K=4 is generated and the preamble is received with a specific value of RTD by a base station.

Referring to the example of FIG. 17, in a second embodiment, when a base station receives a preamble signal from a LTE, the base station may perform a first-stage estimation as described below. The base station may perform a cyclic correlation between a signal received in the configured W1 and the first correlation signals generated as described above, and detect a peak value among the magnitudes of the resulting value obtained by performing the cyclic correlation.

The base station may estimate whether the LTE attempts random access, a root index of SEQ1 generated by the UE, and a residual delay value of the preamble signal through the root index of the first correlation signal, for which the peak value is detected, among the first correlation signals and the location in which the peak value is detected. At this time, the cyclic correlation performed by the base station may be expressed in the time-domain by the following equation.

$$z_{i_1}[l] = \frac{1}{\sqrt{L}} \sum_{n=0}^{L-1} y[n] x_{i_1}^*[(n-l) \bmod L]$$

Here, $y[n]$ denotes a signal received by the base station within W1, $x_{i_1}[n]$ denotes a first correlation signal ($i_1 \in I_1$), and $z_{i_1}[l]$ denotes the result value of the cyclic correlation. Here, the above-mentioned peak value may be defined as being detected when the magnitude of $z_{i_1}[l]$ or the square value of the magnitude is greater than a certain threshold value $\beta$. The base station may determine, through the index of $i_1$ for which the peak value is detected among the first correlation signals, that the UE has generated SEQ1 through the root index corresponding to $i_1$, and use the same to identify the UE ID. In addition, the location in which the peak value is detected may imply the value of $l$ by which the $z_{i_1}[l]$ has a peak value. Furthermore, the base station according to the first embodiment may, for example, in case that the cyclic correlation value of the ZC sequence included in the first signal part is configured as zero, estimate the estimation value of the residual delay defined above, as $t_r = \dfrac{l}{L\Delta f} = \dfrac{l}{L} T_{sym}$ or $n_r = l$, by using the corresponding value of $l$. Here, $\Delta f$ refers to the subcarrier spacing of the system. Additionally, the above cyclic correlation may also be performed in the frequency domain as shown in the following equation. $Z_{i_1}[k] = Y[k]X_{i_1}^*[k]$ , $k = 0, 1, ..., L-1$.

Here, $\{Y[k]\}_{k=0}^{L-1} \triangleq \mathrm{DFT}\{y[l]\}_{l=0}^{L-1}$, $\{X_{i_1}[k]\}_{k=0}^{L-1} \triangleq \mathrm{DFT}\{x_{i_1}[l]\}_{l=0}^{L-1}$. The DFT operation here may also be performed via a low complexity IFFT.

Next, referring to the example of FIG. 17, after performing the above first-stage estimation, the base station may perform the second-stage estimation as described below. By referring to the residual delay value of the received preamble signal estimated in the first stage estimation, the base station may configure K sub-windows (SW) for generating the second correlation signal from the starting point of W2 in order to perform the second-stage estimation. Here, each SW may have a length of one symbol, that is, a length of $T_{sym}$. Specifically, the position of the first SW (SW1) may be configured to be spaced apart by an offset corresponding to the residual delay value, estimated in the first-stage estimation, from the starting point of W2, and the positions of the remaining (K-1) SWs may be configured to be sequentially spaced apart by one symbol with reference to the first SW. The base station may perform correlation within each of the configured K SWs by using the second correlation signals generated above, and generate a correlation result value

$c_1, c_2, ..., c_K$ on each SW. Here, $c_1, c_2, ..., c_K$ may be calculated as $c_k = \left| \frac{1}{\sqrt{L}} \sum_{n=0}^{L-1} y_k[n] x_{i_2}^*[n] \right|^2$ or

$c_k = \left| \frac{1}{\sqrt{L}} \sum_{n=0}^{L-1} y_k[n] x_{i_2}^*[n] \right|$. Here, $y_k[n]$ denotes a signal received on the kth SW, and $x_{i_2}[n]$ denotes a second correlation signal. In addition, the base station according to the second embodiment may perform an estimation of the above-defined symbol-level delay based on the value in which a peak value is detected among the values of $c_1, c_2, ..., c_K$. Specifically, the base station may determine that the peak value has been detected in case that each of the values $c_1, c_2, ..., c_K$ is equal to or greater than a certain threshold value $\beta$. If the peak value is detected at $c_k$, the base station may determine the estimation value of the symbol-level delay defined above as $k_{sym} = (k-1)$. In addition, the base station may determine, through the index of $i_2$ for which the peak value is detected among the second correlation signals, that the LTE has generated SEQ2 through the root index corresponding to $i_2$, and use the same to identify the LTE ID. For reference, the example shown in FIG. 17 illustrates a situation in which a peak value is detected at $c_3$ and determined to be $k_{sym} = 2$.

Finally, the base station according to the second embodiment may derive $T_{RTD} = k_{sym} \cdot T_{sym} + t_r$, which is a final RTD value of the received preamble signal, or $N_{RTD} = k_{sym} \cdot N_{sym} + n_r$, which is a final RTD value in the units of samples, by using the residual delay $t_r$ or $n_r$ value estimated in the first-stage estimation and the symbol-level delay $k_{sym}$ value estimated in the second-stage estimation.

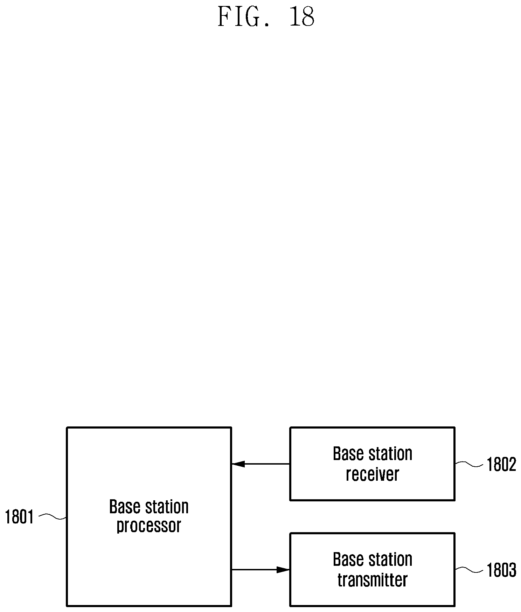

FIG. 18 is a block diagram showing the structure of a base station according to an embodiment of the disclosure.

Referring to FIG. 18, a base station may include a base station receiver 1802, a base station transmitter 1803, and a base station processor 1801. The base station receiver 1802 and the base station transmitter 1803 may be referred to as a transceiver. According to the communication method of the base station described above, the base station receiver 1802, the base station transmitter 1803, and the base station processor 1801 may operate. However, elements of the base station are not limited to the above-described examples. For example, the base station may include more elements (e.g., memory, etc.) or fewer elements than the aforementioned elements. In addition, the base station receiver 1802, the base station transmitter 1803, and the base station processor 1801 may be implemented in the form of a single chip.

The base station receiver 1802 and the base station transmitter 1803 (or transceiver) may transmit and receive signals to and from a LTE. Here, signals may include control information and data. To this end, the transceiver may include an RF transmitter for up-converting and amplifying the frequency of a transmitted signal, and an RF receiver for low-noise amplifying a received signal and down-converting the frequency. However, this is only an embodiment of the transceiver, and elements of the transceiver are not limited to the RF transmitter and the RF receiver.

In addition, the transceiver may receive a signal through a radio channel, output the signal to the base station processor 1801, and transmit the signal output from the base station processor 1801 through a radio channel.

A memory (not shown) may store programs and data required for the operation of the base station. In addition, the memory may store control information or data included in a signal obtained from the base station. The memory may include a storage medium such as a ROM, a RAM, a hard disk, a CD-ROM, and a DVD, or a combination of storage media.

The base station processor 1801 may control a series of processes so that the base station operates according to the above-described embodiment of the disclosure. The base station processor 1801 may be implemented as a controller or one or more processors.

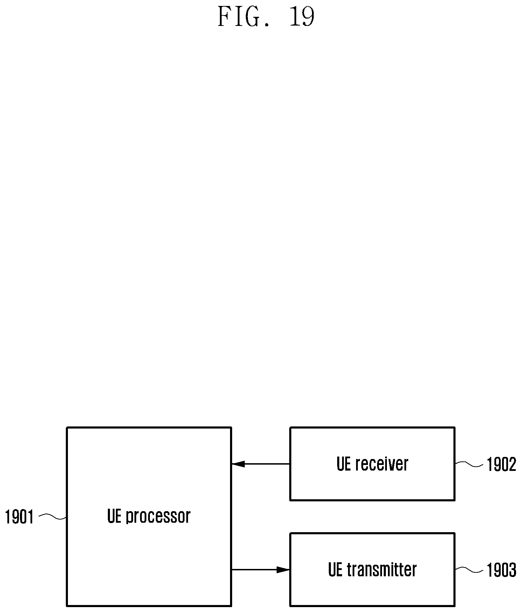

FIG. 19 is a block diagram showing the structure of a UE according to an embodiment of the disclosure.

Referring to FIG. 19, a UE may include a UE receiver 1902, a UE transmitter 1903, and a UE processor 1901. The UE receiver 1902 and the UE transmitter 1903 may be referred to as a transceiver. According to the communication method of a UE described above, the UE receiver 1902, the UE transmitter 1903, and the UE processor 1901 may operate. However, the elements of the LTE are not limited to the above-described examples. For example, the UE may include more elements (e.g., memory, etc.) or fewer elements than the aforementioned elements. In addition, the UE receiver 1902, the UE transmitter 1903, and the UE processor 1901 may be implemented in the form of a single chip.

The UE receiver 1902 and the UE transmitter 1903 (or transceiver) may transmit and receive signals to and from the base station. Here, signals may include control information and data. To this end, the transceiver may include an RF transmitter for up-converting and amplifying the frequency of a transmitted signal, and an RF receiver for low-noise amplifying a received signal and down-converting the frequency. However, this is only an embodiment of the transceiver, and elements of the transceiver are not limited to the RF transmitter and the RF receiver.

In addition, the transceiver may receive a signal through a wireless channel, output the signal to the LTE processor 1901, and transmit the signal output from the LTE processor 1901 through the wireless channel.

A memory (not shown) may store programs and data required for operation of the UE. In addition, the memory may store control information or data included in a signal obtained from the UE. The memory may include a storage medium such as a ROM, a RAM, a hard disk, a CD-ROM, and a DVD, or a combination of storage media.

The UE processor 1901 may control a series of processes so that the UE may operate according to the above-described embodiment of the disclosure. The LTE processor 1901 may be implemented as a controller or one or more processors.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments, but should be defined by the appended claims and equivalents thereof.

**Claims**

1. A terminal of a communication system, the terminal comprising:

    a transceiver; and

a controller,
wherein the controller is configured to:

generate a preamble signal;
transmit the preamble signal to a base station; and
receive a random access response including timing advance (TA) information from the base station in response to the transmission of the preamble signal, and
wherein the preamble signal comprises a first signal part related to a first sequence, a guard time, and a second signal part related to a second sequence.

2. The terminal of claim 1, wherein the timing advance is determined based on a round trip delay (RTD) measured based on the preamble signal,

wherein the RTD is determined based on a first delay time determined based on the first signal part and a second delay time determined based on the second signal part,
wherein the first delay time is determined based on a cyclic correlation between a first correlation signal and a signal received in a first window based on the length of the first signal part, and
wherein the second delay time is determined based on a cyclic correlation between a second correlation signal and a signal received in one or more second windows based on the first delay time.

3. The terminal of claim 1, wherein the controller is further configured to obtain a set of root indices related to the first sequence and a set of root indices related to the second sequence,

wherein the first sequence is generated based on a root index randomly selected from the set of root indices related to the first sequence, and
wherein the second sequence is generated based on a root index randomly selected from the set of root indices related to the second sequence.

4. The terminal of claim 1, wherein the first signal part comprises a first cyclic prefix (CP) and one or more symbols including the first sequence, and
wherein the second signal part comprises a second CP and one symbol including the second sequence.

5. The terminal of claim 1, wherein the length of the guard time is determined according to a preconfigured length or a length of the first signal part.

6. The terminal of claim 1, wherein the first sequence and the second sequence are generated based on the same root index and have different cyclic shifts.

7. The terminal of claim 1, wherein the length of the first signal part is determined based on a maximum round trip delay (RTD) or delay spread of a cell.

8. A base station of a communication system, the base station comprising:

a transceiver; and
a controller,
wherein the controller is configured to:

receive a preamble signal from a terminal; and
transmit a random access response including timing advance (TA) information to the terminal in response to the reception of the preamble signal, and
wherein the preamble signal comprises a first signal part related to a first sequence, a guard time, and a second signal part related to a second sequence.

9. The base station of claim 8, wherein the timing advance is determined based on a round trip delay (RTD) measured based on the preamble signal,

wherein the RTD is determined based on a first delay time determined based on the first signal part and a second delay time determined based on the second signal part,

wherein the first delay time is determined based on a cyclic correlation between a first correlation signal and a signal received in a first window based on the length of the first signal part, and

wherein the second delay time is determined based on a cyclic correlation between a second correlation signal and a signal received in one or more second windows based on the first delay time.

10. The base station of claim 8, wherein the controller is further configured to obtain a set of root indices related to the first sequence and a set of root indices related to the second sequence,

wherein the first sequence is generated based on a root index randomly selected from the set of root indices related to the first sequence, and

wherein the second sequence is generated based on a root index randomly selected from the set of root indices related to the second sequence.

11. The base station of claim 8, wherein the first signal part comprises a first cyclic prefix (CP) and one or more symbols including the first sequence, and

wherein the second signal part comprises a second CP and one symbol including the second sequence.

12. The base station of claim 8, wherein the length of the guard time is determined according to a preconfigured length or a length of the first signal part.

13. The base station of claim 8, wherein the first sequence and the second sequence are generated based on the same root index and have different cyclic shifts, and

wherein the length of the first signal part is determined based on a maximum round trip delay (RTD) or delay spread of a cell.

14. A method by a terminal of a communication system, the method comprising:

generating a preamble signal;

transmitting the preamble signal to a base station; and

receiving a random access response including timing advance (TA) information from the base station in response to the transmission of the preamble signal,

wherein the preamble signal comprises a first signal part related to a first sequence, a guard time, and a second signal part related to a second sequence.

15. A method by a base station of a communication system, the method comprising:

receiving a preamble signal from a terminal; and

transmitting a random access response including timing advance (TA) information to the terminal in response to the reception of the preamble signal,

wherein the preamble signal comprises a first signal part related to a first sequence, a guard time, and a second signal part related to a second sequence.

# FIG. 1

Radio frame (104)

Subframe (103)

Slot (102)

$N_{sc}^{BW}$ subcarriers (105)

Resource element (106)

$N_{sc}^{RB}$ subcarriers (108)

Resource block (107)

$N_{symb}$ OFDM symbols (101)

frequency

time

# FIG. 2

# FIG. 3

1 symbol
(301)

DMRS
(305)

12 subcarriers [302]

CCE
(304)

REG
(303)

# FIG. 4

Control resource set duration (404)

System bandwidth (410)

Subband (403)

Slot (420)

Frequency

Time

control resource set#1 (401)

control resource set#2 (402)

# FIG. 5

1 subcarrier
with subcarrier
spacing $\varDelta f$

1 RB
= 12 subcarriers

PDCCH REs (501)

DMRS REs (502)

PDSCH REs (503)

1 Slot (or Subframe)
= 14 OFDM symbols

FIG. 6A

Base station operation

START

Transmit synchronization signal ⌇ 601

Receive PRACH preamble signal from UE ⌇ 602

Estimate round-trip delay of
signal between base station and UE,
and detect preamble ID generated by UE ⌇ 603

Transmit random access response to UE ⌇ 604

END

# FIG. 6B

UE operation

```
┌─────────────┐
│    START    │
└─────────────┘
```

Receive synchronization signal from base station — 605

Transmit PRACH preamble signal to base station — 606

Receive random access response from base station — 607

```
┌─────────────┐
│     END     │
└─────────────┘
```

# FIG. 7A

700

701

First signal part : K symbols +CP
Total length : $T_1 = T_{CP1} + K \cdot T_{sym}$

702

703

Second signal part : One symbol + CP
Total length : $T_2 = T_{CP2} + T_{sym}$

| CP | Symbol 1 [SEQ1] | Symbol 2 [SEQ1] | · · · | Symbol K [SEQ1] | Guard time | CP | Symbol [SEQ2] |

$T_{CP1}$  $T_{sym}$

$T_{CP2}$  $T_{sym}$

704
Length-L sequence

705
Length-L sequence

# FIG. 7B

Preamble signal generating
operation of UE

START

Receive synchronization signal from
base station — 710

Generate sequence (SEQ1)
having L length — 711

Generate first signal part — 712

Generate sequence (SEQ2)
having L length — 713

Generate second signal part — 714

Transmit PRACH preamble signal to
base station — 715

END

FIG. 8

```
┌──────┐                                                      ┌──────────────┐
│  UE  │                                                      │ Base station │
└──────┘                                                      └──────────────┘
```

Transmit root index values of SEQ1 and SEQ2 through PBCH

# FIG. 9

```
┌──────┐                                                    ┌──────────────┐
│  UE  │                                                    │ Base station │
└──────┘                                                    └──────────────┘
    ┆                                                              ┆
    ┆                                                              ┆
    ┆      Transmit root index values of SEQ1 and SEQ2 through MIB ┆
    ┆ ◄────────────────────────────────────────────────────────── ┆
    ┆                                                              ┆
    ┆                                                              ┆
    ┆                                                              ┆
    ┆                                                              ┆
    ┆                                                              ┆
    ┆                                                              ┆
```

FIG. 10

```
┌──────┐                                                    ┌──────────────┐
│  UE  │                                                    │ Base station │
└──────┘                                                    └──────────────┘
```

Transmit root index values of SEQ1 and SEQ2 through SIB

# FIG. 11A

$T_{RTD}$

PRACH preamble

PRACH slot start time in
base station

$$T_{RTD} = k_{sym} \cdot T_{sym} + t_r$$

$k_{sym}$ : Symbol-level delay

$t_r$ : Residual delay

# FIG. 11B

Two-stage reception operation of
base station

START

Receive PRACH preamble signal from UE ⟶ 1101

Perform first-stage estimation
(residual delay estimation) ⟶ 1102

Perform second-stage estimation
(symbol-level delay estimation) ⟶ 1103

Derive final round-trip delay ⟶ 1104

END

# FIG. 12

[Preamble structure of first embodiment]

1200

1201

1203

1202

**First signal part : K symbols +CP**
Total length : $T_{CP1} + K \cdot T_{sym}$

**Guard time**
Total length : $(K-2) \cdot T_{sym} + (T_{sym} - T_{CP2})$

**Second signal part :**
**One symbol + CP**
Total length : $T_2 = T_{CP2} + T_{sym}$

$T_{CP1}$  $T_{sym}$

$T_{sym}$

$T_{sym} - T_{CP2}$  $T_{CP2}$  $T_{sym}$

1204

1205

Length-L sequence

Length-L sequence

1206

[Example based on K value of preamble structure of first embodiment]

Example of K=4

First signal part   Guard time   Second signal part

Example of K=10

First signal part                    Guard time        Second signal part

# FIG. 13

[Configuration of detection window 1 and 2 of first embodiment]

EP 4 319 447 A1

# FIG. 14

[Example of reception operation in first embodiment (assuming situation of K=4)]

# FIG. 15

[Preamble structure of second embodiment]

1500

1501

1502

1503

First signal part : K symbols +CP
Total length : $T_{CP1} + K \cdot T_{sym}$

Guard time
Total length :
$[T_{sym} - T_{CP2}]$

Second signal part :
One symbol + CP
Total length : $T_{CP2} + T_{sym}$

| CP | Symbol 1 (SEQ1) | Symbol 2 (SEQ1) | ⋯ | Symbol K (SEQ1) | Guard time | CP | Symbol (SEQ2) |

$T_{CP1}$ $T_{sym}$

$T_{sym} - T_{CP2}$ $T_{CP2}$ $T_{sym}$

1504

1505

Length-L sequence

Length-L sequence

Cyclic shift relation

1506

[Example based on K value of preamble structure of second embodiment]

Example of K=4

Guard time

First signal part / Second signal part

Example of K=10

Guard time

First signal part / Second signal part

# FIG. 16

[Configuration of detection windows 1 and 2 of second embodiment]

# FIG. 17

[Example of reception operation in second embodiment (assuming situation of K=4)]

FIG. 18

```
         ┌──────────────────┐        ┌──────────────────┐
         │                  │ ◄──────│   Base station   │  ～ 1802
         │                  │        │    receiver      │
  1801 ～ │   Base station   │        └──────────────────┘
         │    processor     │        ┌──────────────────┐
         │                  │ ──────► │   Base station   │  ～ 1803
         │                  │        │   transmitter    │
         └──────────────────┘        └──────────────────┘
```

FIG. 19

FIG. 20

**INTERNATIONAL SEARCH REPORT**

| International application No. |
| --- |
| **PCT/KR2022/008207** |

| | |
| --- | --- |
| **A.** | **CLASSIFICATION OF SUBJECT MATTER** |

**H04W 74/08**(2009.01)i; **H04W 74/00**(2009.01)i; **H04W 56/00**(2009.01)i; **H04L 27/26**(2006.01)i

According to International Patent Classification (IPC) or to both national classification and IPC

| | |
| --- | --- |
| **B.** | **FIELDS SEARCHED** |

Minimum documentation searched (classification system followed by classification symbols)

H04W 74/08(2009.01); H04B 7/26(2006.01); H04L 27/26(2006.01); H04W 72/04(2009.01); H04W 74/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 랜덤 액세스(random access), 프리앰블(preamble), 타이밍 어드밴스(TA: timing advance), 시퀀스(sequence), 왕복 지연 시간(RTD: round trip delay), 루트 인덱스(root index), CP(cyclic prefix)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| Y | KR 10-1880523 B1 (ELECTRONICS AND TELECOMMUNICATIONS RESEARCH INSTITUTE) 20 July 2018 (2018-07-20)<br>See paragraphs [0039], [0042], [0187] and [0192]-[0193]. | 1-15 |
| Y | WO 2021-063409 A1 (HUAWEI TECHNOLOGIES CO., LTD.) 08 April 2021 (2021-04-08)<br>See page 12, lines 26-31 and page 17, lines 30-37; claims 1 and 4-6; and figure 3-C. | 1-15 |
| Y | KR 10-2018-0053205 A (SAMSUNG ELECTRONICS CO., LTD.) 21 May 2018 (2018-05-21)<br>See claims 12-15. | 2,9 |
| Y | KR 10-2008-0112077 A (LG ELECTRONICS INC.) 24 December 2008 (2008-12-24)<br>See paragraphs [0047] and [0105]. | 5,7,12-13 |
| A | WO 2020-173464 A1 (HUAWEI TECHNOLOGIES CO., LTD.) 03 September 2020 (2020-09-03)<br>See claims 1-10. | 1-15 |

| ☐ Further documents are listed in the continuation of Box C. | ☑ See patent family annex. |
| --- | --- |

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **13 September 2022** | **14 September 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/008207**

| Patent document cited in search report | | | Publication date (day/month/year) | Patent family member(s) | | | Publication date (day/month/year) |
|---|---|---|---|---|---|---|---|
| KR | 10-1880523 | B1 | 20 July 2018 | KR | 10-2018-0062956 | A | 11 June 2018 |
| | | | | US | 10548168 | B2 | 28 January 2020 |
| | | | | US | 2018-0220466 | A1 | 02 August 2018 |
| WO | 2021-063409 | A1 | 08 April 2021 | CN | 112583755 | A | 30 March 2021 |
| | | | | CN | 112583755 | B | 06 May 2022 |
| | | | | EP | 4030717 | A1 | 20 July 2022 |
| | | | | US | 2022-0224404 | A1 | 14 July 2022 |
| KR | 10-2018-0053205 | A | 21 May 2018 | EP | 3522622 | A1 | 07 August 2019 |
| | | | | KR | 10-2301820 | B1 | 15 September 2021 |
| | | | | US | 11109330 | B2 | 31 August 2021 |
| | | | | US | 2019-0281564 | A1 | 12 September 2019 |
| KR | 10-2008-0112077 | A | 24 December 2008 | CN | 101809896 | A | 18 August 2010 |
| | | | | CN | 101809896 | B | 03 December 2014 |
| | | | | EP | 2176966 | A1 | 21 April 2010 |
| | | | | EP | 2176966 | B1 | 27 June 2018 |
| | | | | JP | 2010-536223 | A | 25 November 2010 |
| | | | | JP | 2013-102466 | A | 23 May 2013 |
| | | | | JP | 5167357 | B2 | 21 March 2013 |
| | | | | JP | 5466290 | B2 | 09 April 2014 |
| | | | | US | 2009-0067540 | A1 | 12 March 2009 |
| | | | | US | 2012-0099532 | A1 | 26 April 2012 |
| | | | | US | 8107445 | B2 | 31 January 2012 |
| | | | | US | 8660066 | B2 | 25 February 2014 |
| | | | | WO | 2009-020292 | A1 | 12 February 2009 |
| WO | 2020-173464 | A1 | 03 September 2020 | CN | 111629448 | A | 04 September 2020 |
| | | | | EP | 3920638 | A1 | 08 December 2021 |
| | | | | US | 2021-0392703 | A1 | 16 December 2021 |

Form PCT/ISA/210 (patent family annex) (July 2019)